(19) Europäisches Patentamt
European Patent Office
Office européen des brevets

(11) **EP 4 510 464 A1**

(12) **EUROPEAN PATENT APPLICATION**
published in accordance with Art. 153(4) EPC

(43) Date of publication:
**19.02.2025 Bulletin 2025/08**

(21) Application number: 23788518.1

(22) Date of filing: **04.04.2023**

(51) International Patent Classification (IPC):
*H04B 7/0456* (2017.01)   *H04B 7/024* (2017.01)
*H04B 7/06* (2006.01)   *H04L 5/00* (2006.01)

(52) Cooperative Patent Classification (CPC):
**H04B 7/024; H04B 7/0456; H04B 7/06; H04L 5/00**

(86) International application number:
**PCT/KR2023/004497**

(87) International publication number:
**WO 2023/200166 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.04.2022 KR 20220045083**
            **29.09.2022 KR 20220124708**

(71) Applicant: **LG Electronics Inc.**
**Yeongdeungpo-gu**
**Seoul 07336 (KR)**

(72) Inventors:
• **PARK, Haewook**
  **Seoul 06772 (KR)**
• **KIM, Hyungtae**
  **Seoul 06772 (KR)**
• **KIM, Kyuseok**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR TRANSMITTING/RECEIVING SIGNAL IN WIRELESS COMMUNICATION SYSTEM**

(57)    A user equipment according to one or more embodiments disclosed in the present specification can receive configuration information about a plurality of CSI-RS resources, measure CSI on the basis of one or more from among the plurality of CSI-RS resources configured through the configuration information, and transmit a CSI report including the CSI measurement result, wherein the CSI report can include a plurality of bitmaps related to the CSI measurement, a first bitmap from among the plurality of bitmaps is for reporting one or more CSI-RS resources selected for the CSI measurement from among the plurality of CSI-RS resources, and a second bitmap from among the plurality of bitmaps is for reporting positions of non-zero coefficients from among coefficients related to a CSI codebook for each of the selected one or more CSI-RS resources.

**FIG. 16**

Receive configuration information regarding CSI-RS resources — A05

Measure CSI based on at least one of CSI-RS resources — A10

Transmit CSI report — A15

**Description**

## TECHNICAL FIELD

The present disclosure relates to a wireless communication system, and more particularly, to a method and apparatus for transmitting or receiving a downlink/uplink radio signal in a wireless communication system.

## BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

## DISCLOSURE

## TECHNICAL PROBLEM

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

## TECHNICAL SOLUTION

In an aspect of the present disclosure, provided herein is a method of reporting channel state information (CSI) by a user equipment (UE) in a wireless communication system. The method may include: receiving configuration information regarding a plurality of channel state information-reference signal (CSI-RS) resources; measuring the CSI based on at least one of the plurality of CSI-RS resources configured through the configuration information; and transmitting a CSI report including a result of the CSI measurement. The CSI report may include a plurality of bitmaps related to the CSI measurement. A first bitmap among the plurality of bitmaps may be a bitmap for reporting at least one CSI-RS resource selected for the CSI measurement among the plurality of CSI-RS resources. A second bitmap among the plurality of bitmaps may be a bitmap for reporting positions of non-zero coefficients among coefficients related to a CSI codebook for each of the selected at least one CSI-RS resource.

Among first part CSI and second part CSI related to the CSI report, the first bitmap may be included in the first part CSI.

A plurality of bits in the first bitmap may be associated with each of the plurality of CSI-RS resources.

The first bitmap may be configured as a single bitmap for an entirety of the plurality of CSI-RS resources, and The second bitmap may be configured individually for each of the at least one CSI-RS resource selected for the CSI measurement among the plurality of CSI-RS resources.

The second bitmap may be provided only for CSI-RS resources associated with each bit having a binary value of '1' on the first bitmap.

The plurality of CSI-RS resources may be related to a plurality of transmission and reception points (TRPs) for coherent joint transmission (CJT).

The CSI report may include precoding-related information determined based on an enhanced type II (eType-II) codebook in 3rd Generation Partnership Project (3GPP) wireless communication.

The precoding-related information may include information regarding a spatial domain (SD) basis, information regarding a frequency domain (FD) basis, and information regarding a coefficient matrix for combining the SD basis and the FD basis.

The SD basis may be determined individually for each of the plurality of CSI-RS resources.

The number of SD basis vectors related to the SD basis may be configured individually for each of the plurality of CSI-RS resources.

The FD basis may be determined individually for each of the plurality of CSI-RS resources.

The number of FD basis vectors related to the FD basis may be configured individually for each of the plurality of CSI-RS resources.

In another aspect of the present disclosure, provided herein is a computer-readable recording medium having recorded thereon a program for performing the CSI reporting method described above.

In another aspect of the present disclosure, provided herein is a UE configured to perform the CSI reporting method described above.

In another aspect of the present disclosure, provided herein is a device configured to control a UE performing the CSI reporting method described above.

In another aspect of the present disclosure, provided herein is a method of receiving a CSI report by a base station (BS) in a wireless communication system. The method may include: transmitting configuration information regarding a plurality of CSI-RS resources; and receiving the CSI report related to at least one of the plurality of CSI-RS resources configured through the configuration information. The CSI report may include a plurality of bitmaps related to CSI measurement. The BS may identify at least one CSI-RS resource selected for the CSI measurement among the plurality of CSI-RS resources based on a first bitmap among the plurality of bitmaps. The BS may identify positions of non-zero coefficients among coefficients related to a CSI codebook for each of the selected at least one CSI-RS resource based on a second bitmap among the plurality of bitmaps.

In a further aspect of the present disclosure, provided herein is a BS configured to perform the method of receiving a CSI report described above.

## ADVANTAGEOUS EFFECTS

According to the present disclosure, wireless signal transmission and reception may be efficiently performed in a wireless communication system.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary PDSCH and acknowledgment/negative acknowledgment (ACK/NACK) transmission process.

FIG. 6 illustrates an exemplary PUSCH transmission process.

FIG. 7 illustrates an example of a channel state information (CSI) related procedure.

FIG. 8 illustrates multi-transmission and reception point (TRP) transmission.

FIG. 9 illustrates an antenna configuration and a port configuration within a panel.

FIG. 10 illustrates an aggregated channel for coherent joint transmission (CJT).

FIG. 11 illustrates an example of an enhanced Type II codebook for CJT.

FIG. 12 illustrates an example of a TRP/polarization identifier (ID).

FIG. 13 is a diagram for explaining a per-TRP-based frequency domain (FD) basis.

FIG. 14 illustrates operations of a base station (BS) performing a CSI procedure.

FIG. 15 illustrates operations of a user equipment (UE) performing a CSI procedure.

FIG. 16 illustrates an example implementation of a method by which a UE reports CSI in a wireless communication system according to an embodiment of the present disclosure.

FIG. 17 illustrates an example implementation of a method by which a BS receives a CSI report in a wireless communication system according to an embodiment of the present disclosure.

FIGS. 18 to 21 are diagrams illustrating an example of a communication system 1 and wireless devices applicable to the present disclosure.

FIG. 22 is a diagram illustrating an example of a discontinuous reception (DRX) operation applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

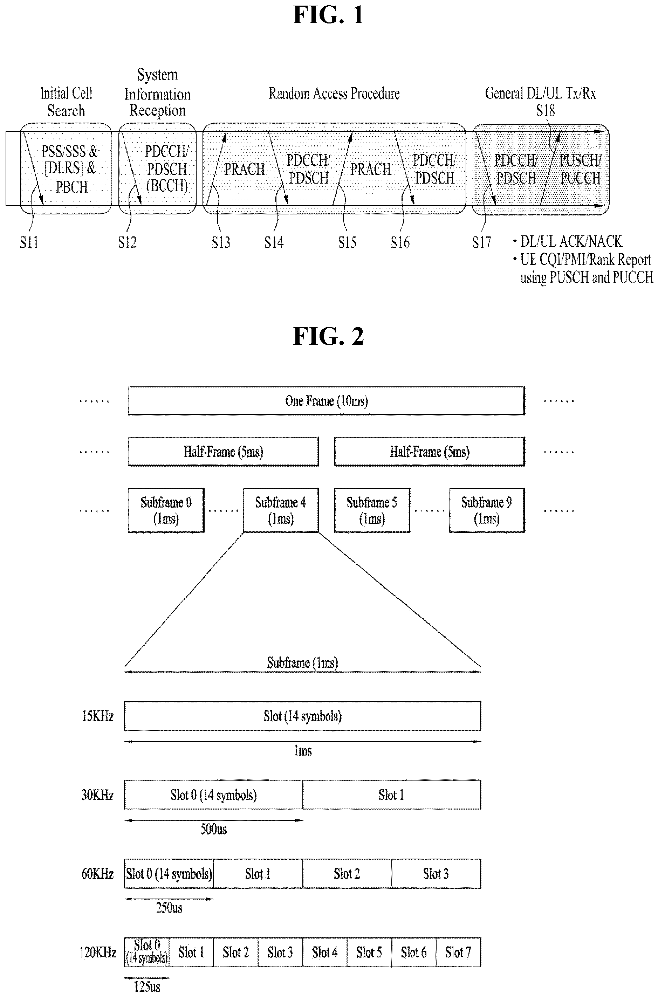

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| $N^{slot}_{symb}$: Number of symbols in a slot<br>$N^{frame,u}_{slot}$: Number of slots in a frame<br>$N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

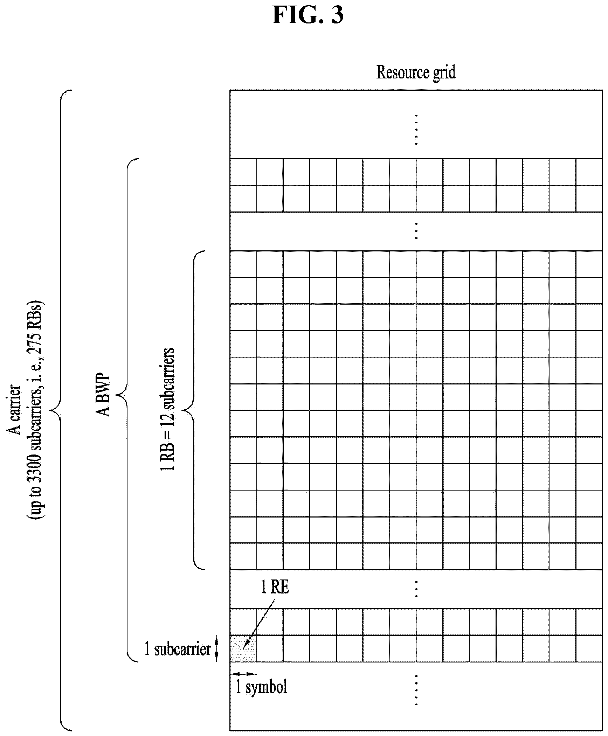

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

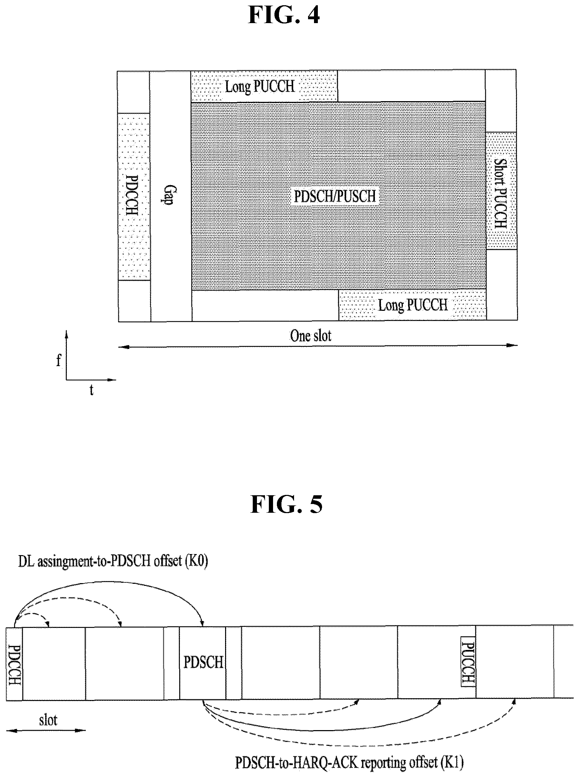

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

controlResourceSetId: A CORESET related to an SS.

monitoringSlotPeriodicityAndOffset: A PDCCH monitoring periodicity (in slots) and a PDCCH monitoring offset (in slots).

monitoringSymbolsWithinSlot: PDCCH monitoring symbols in a slot (e.g., the first symbol(s) of a CORESET).

nrofCandidates: The number of PDCCH candidates (one of 0, 1, 2, 3, 4, 5, 6, and 8) for each AL={1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

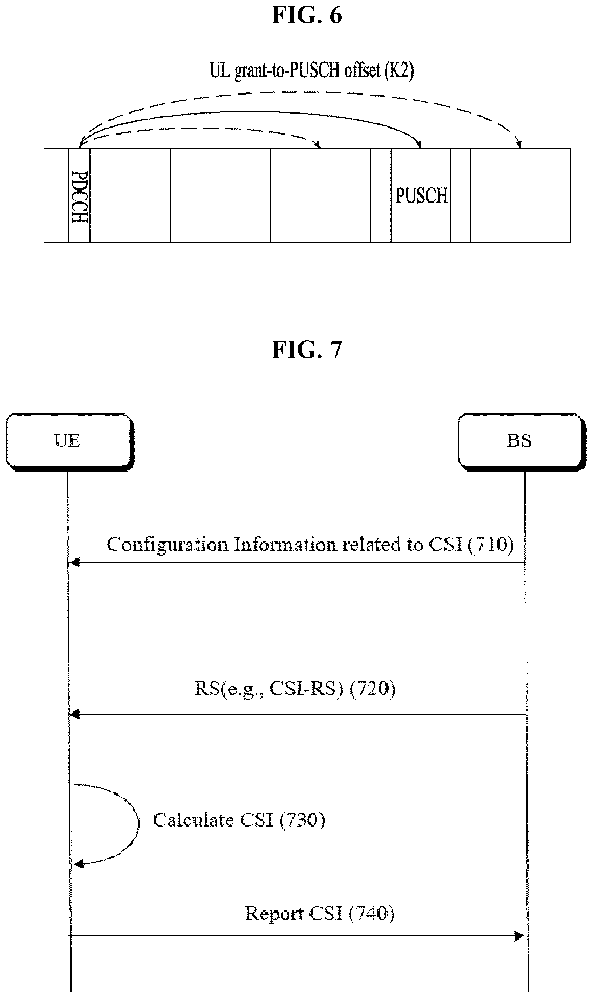

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L 1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state.

SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of transmission configuration indicator (TCI) state configurations may be configured in the UE through a higher layer parameter PDSCH-Config. Each TCI state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Operations related to multiple transmission and reception points (M-TRPs)

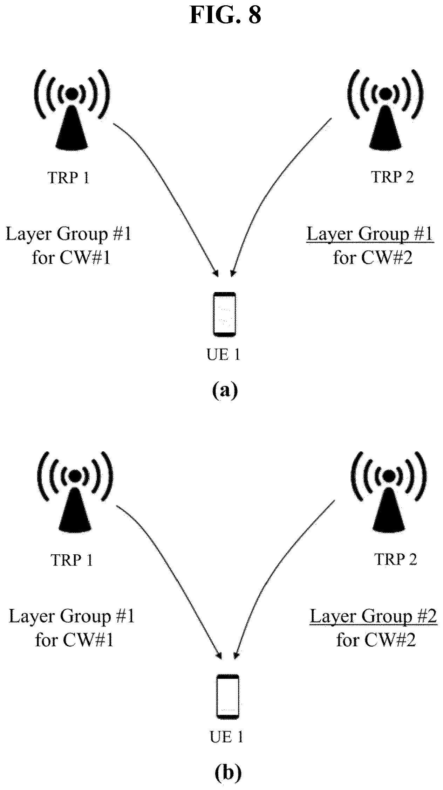

FIG. 8 illustrates multi-TRP (M-TRP) transmission. Referring to FIG. 8(a), a group of layers transmitting the same codeword (CW) (or transport block, TB) correspond to different TRPs. Referring to FIG. 8(b), different CWs are transmitted through layer groups of different TRPs. In this case, it may be assumed that the TBs corresponding to CW #1 and CW #2 in the drawing are the same. In other words, CW #1 and CW #2 mean that the same TB is converted into different CWs through channel coding, etc., by different TRPs. Therefore, it may be considered as an example of repeated transmission of the same TB. In the case of FIG. 8(b), there may be a drawback of a higher coding rate corresponding to the TB, compared to FIG. 8(a). However, FIG. 8(b) has the advantage that, depending on the channel environment, the coding rate may be adjusted by indicating different redundancy version (RV) values for encoded bits generated from the same TB or the modulation order of each CW may be adjusted.

According to the method illustrated in FIGS. 8(a) and 8(b), the same TB is repeatedly transmitted through different layer groups. In addition, as each layer group is transmitted by different TRPs/panels, the probability that the UE successfully receives data may increase. This is referred to as a spatial division multiplexing (SDM) based M-TRP URLLC transmission method. The layers belonging to different layer groups are transmitted through DMRS ports that belong to different DMRS code division multiplexing (CDM) groups.

Although the aforementioned M-TRP-related content has been explained based on the SDM method using different layers, it may be extended and applied to an FDM method based on different frequency domain resources (e.g., RB/PRB sets) and/or a TDM method based on different time domain resources (e.g., slots, symbols, sub-symbols, etc.).

The following schemes shown in Table 6 are being discussed for M-TRP-based URLLC scheduled by a single piece of DCI.

[Table 6]

| 1) Scheme 1 (SDM): The allocation of time and frequency resources overlaps, and there are n (n ≤ Ns) TCI states within a single slot. |
| --- |
| 1-a) Scheme 1a: |
| - At each transmission occasion, the same TB is transmitted on a single layer or a set of layers, and each layer or set of layers is associated with one TCI and a set of one or more DMRS ports. |
| - A single codeword with one RV is used across all spatial layers or sets of layers. From the perspective of the UE, different coded bits are mapped to different layers or sets of layers using the same mapping rule. |
| 1-b) Scheme 1b: |
| - At each transmission occasion, the same TB is transmitted on a single layer or a set of layers, and each layer or set of layers is associated with one TCI and a set of one or more DMRS ports. |
| - A single codeword with one RV is used across each spatial layer or set of layers. The RV(s) corresponding to each spatial layer or set of layers may be the same or different. |
| 1-c) Scheme 1c: |

(continued)

- At a single transmission occasion, the same TB is transmitted on a single layer with a single DMRS port associated with multiple TCI state indices or on a single layer with multiple DMRS ports associated one-to-one with the multiple TCI state indices.

In the case of Scheme 1a and 1c, the same modulation and coding scheme (MCS) is applied to all layers or all sets of layers.

1-c) scheme 1c

2) Scheme 2 (FDM): The allocation of frequency resources does not overlap, and there are n (n ≤ Nf) TCI states within a single slot.

- The allocation of each non-overlapping frequency resource is associated with one TCI state.

- The same single/multiple DMRS port(s) are associated with the allocation of all non-overlapping frequency resources.

2-a) Scheme 2a:

- A single codeword with one RV is used for the allocation of all resources. From the perspective of the UE, common RB mapping (mapping of codewords to layers) is applied to the allocation of all resources.

2-b) Scheme 2b:

- A single codeword with one RV is used for the allocation of each non-overlapping frequency resource. The RV corresponding to the allocation of each non-overlapping frequency resource may be the same or different.

In the case of scheme 2a, the same MCS is applied to the allocation of all non-overlapping frequency resources.

3) Scheme 3 (TDM): The allocation of time resources does not overlap, and there are n (n ≤ Nt1) TCI states within a single slot.

- Each transmission occasion of the TB has the time granularity of a mini-slot and is associated with one TCI and one RV.

- A common MCS is used for either a single or multiple DMRS ports across all transmission occasions within the slot.

- The RV/TCI may be the same or different on different transmission occasions.

4) Scheme 4 (TDM): There are n (n ≤ Nt2) TCI states in K (n ≤ K) different slots

- Each transmission occasion of the TB has one TCI and one RV.

- A common MCS is used for either a single or multiple DMRS ports across all transmission occasions within the K slots

- The RV/TCI may be the same or different on different transmission occasions.

ADL M-TRP URLLC transmission method refers to a method where M-TRPs transmit the same data/DCI using different spatial (e.g., layer/port), time, or frequency resources. For example, TRP 1 may transmit specific data/DCI on resource 1, and TRP 2 may transmit the specific data/DCI (i.e., the same data/DCI) on resource 2.

In other words, when the DL M-TRP URLLC transmission method is configured, the UE may receive the same data/DCI using different spatial, time, or frequency resources. In this case, the UE may receive from the BS indications regarding a QCL RS/type (i.e., DL TCI state) to be used for the spatial, time, or frequency resources where the data/DCI is received.

For example, if the data/DCI is received on both resource 1 and resource 2, the UE may be provided by the BS with a DL TCI state used for resource 1 and a DL TCI state used for resource 2. By receiving the data/DCI on both resource 1 and resource 2, high reliability may be achieved. Such M-TRP URLLC transmission method may be applied to a PDSCH/PDCCH.

A UL M-TRP URLLC transmission method refers to a method where M-TRPs receive the same data/UCI from a single UE using different spatial, time, or frequency resources. For example, TRP 1 may receive the same data/UCI from the UE on resource 1, and TRP 2 may receive the same data/UCI from the UE on resource 2. Furthermore, TRP 1 and TRP 2 may share the data/UCI received from the UE through a backhaul link (connected between the TRPs).

In other words, when the UL M-TRP URLLC transmission method is configured, the UE may transmit the same data/UCI to each TRP using different spatial, time, or frequency resources. In this case, the UE may receive from the BS indications regarding a Tx beam and Tx power (i.e., UL TCI state) to be used on the spatial, time, or frequency resources where the same data/UCI is transmitted. For example, if the same data/UCI is transmitted on resource 1 and resource 2, the UE may be provided with a UL TCI state to be used for resource 1 and a UL TCI state to be used for resource 2 from the BS. The UL M-TRP URLLC transmission method may be applied to a PUSCH/PUCCH.

In the descriptions of the present disclosure, when data/DCI/UCI is transmitted/received on a specific spatial, time, or frequency resource, using (or mapping) a specific TCI state (or TCI) may mean the following: in the case of DL, it may imply that the UE estimates a channel from a DMRS using a QCL type and QCL RS indicated by the specific TCI state for the specific spatial, time, or frequency resource and then receives/demodulates the data/DCI/UCI using the estimated channel.

When data/DCI/UCI is received/transmitted on a specific spatial, time, or frequency resource, using (or mapping) a specific TCI state (or TCI) may mean the following: in the case of UL, it may mean that the UE transmits/modulates a DMRS and data/UCI using a Tx beam and/or Tx power indicated by the specific TCI state for the specific spatial, time, or frequency resource.

The UL TCI state may include information on the Tx beam or Tx power of the UE. Additionally, the BS may configure the UE with spatial relation information rather than the TCI state through other parameters.

For example, the UL TCI state may be directly indicated to the UE through UL grant DCI. Alternatively, the UL TCI state may refer to spatial relation information on a sounding reference signal (SRS) resource indicated by an SRS resource indicator (SRI) field in the UL grant DCI. Alternatively, the UL TCI state may refer to open-loop (OL) Tx power control parameters associated with a value indicated by the SRI field in the UL grant DCI.

Here, the OL Tx power control parameters may include, for example, j (the index for the OP parameter(s) Po and alpha (up to 32 parameter value sets per cell)), q_d (the index of a DL RS resource for path loss (PL) measurement (up to four measurements per cell), and/or I (the index of a closed-loop power control process (up to two processes per cell))

An M-TRP eMBB transmission method refers to a method in which M-TRPs transmit different data/DCI using different spatial, temporal, or frequency resources. When the M-TRP eMBB transmission method is configured, the UE may be provided with multiple TCI states by the BS via DCI, and the UE may assume that data received using QCL RSs indicated by each of the multiple TCI states are different.

When an M-TRP URLLC RNTI and an M-TRP eMBB RNTI are distinguished and used separately, the UE may determine whether specific transmission is M-TRP URLLC transmission or M-TRP eMBB transmission. For example, if an RNTI for URLLC is used and CRC-masked for DCI, the UE may identify that corresponding transmission is URLLC transmission. Similarly, if an RNTI for eMBB is used and CRC-masked for DCI, the UE may identify that corresponding transmission is eMBB transmission. As another example, the BS may configure the UE with the M-TRP URLLC transmission/reception method or the M-TRP eMBB transmission/reception method through new signaling.

For the sake of convenience, it is assumed in the present disclosure that two TRPs cooperate to perform transmission/reception operations, but the present disclosure is not limited thereto. In other words, the present disclosure may be extended and applied to environments with three or more M-TRPs as well as to environments where transmission/reception is performed with different panels or beams within the same TRP. The UE may recognize different TRPs as different TCI states. When the UE transmits/receives data/DCI/UCI using TCI state 1, it means that the UE is transmitting/receiving data/DCI/UCI from or to TRP 1.

The present disclosure may be used in situations where M-TRPs cooperatively transmit a PDCCH (by repeatedly transmitting the same PDCCH or dividing the transmission). Additionally, the present disclosure may be applied in situations where M-TRPs cooperatively transmit a PDSCH or cooperatively receives a PUSCH/PUCCH.

When a plurality of BSs (i.e., M-TRPs) repeatedly transmit the same PDCCH, it may mean that the same DCI is transmitted over multiple PDCCH candidates, which is equivalent to meaning that multiple BSs repeatedly transmit the same DCI. In this case, two DCIs with the same format/size/payload may be considered to be the same.

Alternatively, even when the payloads of two DCIs are different, if the scheduling results are the same, the two DCIs may be considered identical. For example, a time domain resource allocation (TDRA) field in DCI may determine the position of a data slot/symbol and the position of an ACK/NACK (A/N) slot/symbol relative to the time of receiving the DCI.

In this case, if DCI received at time n and DCI received at time n+1 indicate the UE with the same scheduling results, the TDRA fields of the two DCIs may differ, and as a result, the DCI payloads may be different. Therefore, even if the payloads of the two DCIs are different, if the scheduling results are the same, the two DCIs may be considered identical. Here, the repetition number R may be directly indicated by the BS to the UE or mutually agreed therebetween.

Alternatively, even when the payloads of the two DCIs are different and the scheduling results are not the same, if the scheduling result of one of the two DCIs is a subset of the scheduling result of the other DCI, the two DCIs may be considered identical.

For example, if the same data is (time division multiplexed) TDMed and transmitted repeatedly N times, DCI 1 received before first data may indicate (or schedule) N data repetitions, while DCI 2 received before second data may indicate (or schedule) N-1 data repetitions. In this case, the scheduling result (or data) of DCI 2 is a subset of the scheduling result (or data) of DCI 1, and the two DCIs have the same scheduling result for the same data. Therefore, in this case, the two DCIs may be considered identical.

When a plurality of BSs (i.e., M-TRPs) divide the transmission of the same PDCCH, it may mean that one DCI is transmitted through one PDCCH candidate, TRP 1 transmits a part of the resources defined for the PDCCH candidate, and TRP 2 transmits the remaining resources.

For example, if TRP 1 and TRP 2 divide the transmission of a PDCCH candidate corresponding to aggregation level (AL) m1 + m2, the PDCCH candidate may be divided into PDCCH candidate 1 corresponding to AL m1 and PDCCH candidate 2 corresponding to AL m2. In addition, TRP 1 may transmit PDCCH candidate 1, and TRP 2 may transmit PDCCH candidate 2. In this case, TRP 1 and TRP 2 may transmit PDCCH candidate 1 and PDCCH candidate 2 on different time/frequency resources. After receiving PDCCH candidate 1 and PDCCH candidate 2, the UE may combine PDCCH candidate 1 and PDCCH candidate 2 to form a PDCCH candidate corresponding to AL m 1 + m2 and attempt DCI decoding.

In this case, dividing and transmitting the same DCI across multiple PDCCH candidates may be implemented in the following two methods.

The first method involves encoding the payload of DCI (e.g., control information + CRC) through a single channel encoder (e.g., a polar encoder) and then dividing and transmitting the encoded DCI payload via two TRPs. In other words, the first method refers to transmitting coded bits, obtained as a result of encoding, by dividing the coded bits via the two TRPs. In this case, the coded bits transmitted by each TRP may include the entire DCI payload, but the present disclosure is not limited thereto. That is, only a portion of the DCI payload may be encoded.

The second method involves dividing the payload of DCI (e.g., control information + CRC) into two DCIs (e.g., DCI 1 and DCI 2) and then encoding each of the two DCIs through a channel encoder (e.g., a polar encoder). Thereafter, each of two TRPs may transmit the coded bits corresponding to DCI 1 and DCI 2 to the UE.

In other words, when a plurality of BSs (M-TRPs) divide/repeat the transmission of the same PDCCH across a plurality of monitoring occasions (MOs), it may mean that: 1) coded bits obtained by encoding the entire DCI content of the PDCCH are repeatedly transmitted by each BS (serving TRP (S-TRP)) on each MO; 2) the coded bits obtained by encoding the entire DCI content of the PDCCH are divided into multiple parts and each BS (S-TRP) transmits a different part on each MO; and 3) the DCI content of the PDCCH is divided into multiple parts, and each BS (S-TRP) encodes a different part (i.e., separate encoding) and transmits the encoded part on each MO.

When the transmission of a PDCCH is repeated/divided, it may be understood as transmitting the PDCCH multiple times across several TOs.

Generally, a TO refers to each channel transmitted at different times when multiple channels are TDMed, each channel transmitted on different frequencies/RBs when multiple channels are frequency division multiplexed (FDMed), or each channel transmitted on different layers/beams/DMRS ports when multiple channels are spatial division multiplexed (SDMed). Each TO may be mapped to one TCI state. When the same channel is repeatedly transmitted, complete data/DCI/UCI is transmitted on one TO, and a receiver may receive multiple TOs to increase the success rate of reception.

In the case of PDCCH transmission, the TO may refer to a specific time and/or frequency resource unit where the PDCCH is transmitted. For example, if the PDCCH is transmitted multiple times across slots 1, 2, 3, and 4 (on a specific RB), the TO may refer to each slot. In another example, if the PDCCH is transmitted multiple times across RB sets 1, 2, 3, and 4 (in a specific slot), the TO may refer to each RB set. In another example, if the PDCCH is transmitted multiple times at different times and frequencies, the TO may refer to each time/frequency resource. Additionally, the TCI state used for DMRS channel estimation may be set differently for each TO, and TOs with different TCI states may be assumed to be transmitted by different TRPs/panels.

When a plurality of BSs repeat or divide the transmission of a PDCCH, it may mean that the PDCCH is transmitted across multiple TOs, and the union of TCI states configured for the TOs includes two or more TCI states. For example, if the PDCCH is transmitted across TOs 1, 2, 3, and 4, TCI states 1, 2, 3, and 4 may be configured for TOs 1, 2, 3, and 4, respectively, which indicates that TRP i cooperatively transmits the PDCCH on TO i.

In the descriptions of the present disclosure, when the UE repeatedly transmits the same PUSCH to a plurality of BSs (i.e., M-TRPs), it may mean that the UE transmits the same data over multiple PUSCHs, and each PUSCH may be optimized for the UL channel of a different TRP.

For example, the UE may repeatedly transmit the same data on PUSCH 1 and PUSCH 2. In this case, PUSCH 1 is transmitted using UL TCI state 1 for TRP 1. For PUSCH transmission, link adaptation parameters such as a precoder, MCS, etc. are also scheduled with values optimized for the channel of TRP 1. PUSCH 2 is transmitted using UL TCI state 2 for TRP 2, For PUSCH transmission, link adaptation parameters such as a precoder, MCS, etc. are also scheduled with values optimized for the channel of TRP 2. In this case, PUSCH 1 and PUSCH 2, which are repeatedly transmitted, may be transmitted at different times, and PUSCH 1 and PUSCH 2 may be TDMed, FDMed, or SDMed.

Additionally, when the UE divides the same PUSCH and transmits the divided PUSCH to a plurality of BSs (i.e., M-TRPs), it may mean that the UE transmits a single piece of data over one PUSCH, but the resources allocated to the PUSCH are divided and transmitted, optimized for UL channels of different TRPs.

For example, the UE may transmit the same data on a 10-symbol PUSCH. In this case, the UE may transmit the first 5 symbols using UL TCI state 1 for TRP 1. The UE may be scheduled with link adaptation parameters such as a precoder, MCS, etc. and values optimized for the channel of TRP 1 and then transmit the 5-symbol PUSCH to TRP 1. The UE may transmit the remaining 5 symbols using UL TCI state 2 for TRP 2. The UE may be scheduled with link adaptation parameters such as a precoder, MCS, etc. and values optimized for the channel of TRP 2 and then transmit the remaining 5-symbol PUSCH (to TRP 2).

In the above example, dividing a single PUSCH into time resources and performing TDM between transmission to TRP 1 and transmission to TRP 2 is described, but the present disclosure is not limited thereto. The UE may also use FDM or SDM to divide and transmit the same PUSCH to a plurality of BSs.

The UE may repeatedly transmit a PUCCH to a plurality of BSs or divide and transmit the same PUCCH (in a similar way to PUSCH transmission).

Additionally, when multiple TOs are indicated to the UE for the purpose of repeating or dividing the transmission of a PDCCH/PDSCH/PUSCH/PUCCH, each TO may be transmitted to a specific TRP in UL or received from a specific TRP in DL. In this case, a UL TO transmitted to TRP 1 (or TO of TRP 1) may refer to a TO that uses a first value among two spatial relations, two UL TCI states, two UL power control parameters, or two PL RSs indicated to the UE. A UL TO transmitted to TRP 2 (or TO of TRP 2) may refer to a TO that uses a second value among the two spatial relations, two UL TCI states, two UL power control parameters, or two PL-RSs indicated to the UE.

Similarly, during DL transmission, a DL TO transmitted from TRP 1 (or TO of TRP 1) may refer to a TO that uses a first value among two DL TCI states indicated to the UE (for example, when the two TCI states are configured in a CORESET). A DL TO transmitted from TRP 2 (or TO of TRP 2) may refer to a TO that uses a second value among the two DL TCI states indicated to the UE (for example, when the two TCI states are configured in a CORESET).

The present disclosure may be extended and applied to various channels including the PUSCH/-PUCCH/PDSCH/PDCCH. Additionally, the present disclosure may be applied in situations where the channels are repeatedly transmitted on different spatial/temporal/frequency resources as well as in situations where the channels are transmitted in a divided manner.

Additionally, from the perspective of DCI transmission, M-TRP transmission methods may be divided into: i) an M-TRP transmission method based on multiple pieces of DCI (multiple DCI or M-DCI), where each TRP transmits different DCI; and ii) an M-TRP transmission method based on a single piece of DCI (single DCI or S-DCI) where one TRP transmits DCI. For example, in the case of S-DCI, since all scheduling information on data transmitted by M-TRPs needs to be conveyed in a single piece of DCI, the method may be used in an ideal backhaul (BH) environment where dynamic cooperation between two TRPs is allowed.

Regarding M-TRP transmission and reception in the Rel-16 NR standardization, both the S-DCI based M-TRP transmission method and the M-DCI based M-TRP transmission method are supported for PDSCH transmission and reception

First, an S-DCI based M-TRP PDSCH transmission method will be described.

For S-DCI based M-TRP PDSCH transmission, one of the SDM, FDM, and/or TDM methods may be used. In the case of SDM, the BS transmits a single TB using multiple layers, but the BS transmits layers belonging to different DMRS CDM groups through different transmission beams (Tx beams) (i.e., QCL RSs or TCI states). This method may increase the number of layers compared to the conventional S-TRP transmission method, thereby improving the transmission capacity. In addition, when a single TB is transmitted using multiple layers, some layers may be transmitted to TRP 1 while the remaining layers are transmitted to TRP 2, which may enhance the channel reliability through diversity gain.

For FDM, two schemes: scheme 2a and scheme 2b are supported. In scheme 2a, a single TB is transmitted across multiple RBs, and RBs in different RB groups are transmitted using different Tx beams (i.e., QCL RSs or TCI states). In scheme 2b, the same TB is transmitted across different RB groups, and RBs in different RB groups are transmitted using different Tx beams (i.e., QCL RSs or TCI states). For TDM, two schemes: scheme 3 and scheme 4 are supported. In scheme 4 (i.e., inter-slot TDM), the same TB across is repeatedly transmitted across multiple slots, and slots in different slot groups are transmitted using different Tx beams (i.e., QCL RSs or TCI states). In scheme 3 (i.e., intra-slot TDM), the same TB is repeatedly transmitted across multiple OFDM symbol groups, and some OFDM symbol groups and the remaining OFDM symbol groups are transmitted using different Tx beams (i.e., QCL RSs or TCI states).

Next, an M-DCI based M-TRP PDSCH transmission method will be described.

In M-DCI based M-TRP PDSCH transmission, each TRP schedules and transmits a PDSCH through DCI. In other words, TRP 1 transmits PDSCH 1 through DCI 1, and TRP 2 transmits PDSCH 2 through DCI 2. When PDSCH 1 and PDSCH 2 overlap on the same frequency-time resources, two PDSCHs are received on the same RE, which leads to increases in the resource efficiency and transmission capacity. To this end, the concept of a CORESET pool, which refers to a group of multiple CORESETs, has been introduced. For example, TRP 1 transmits a PDCCH in a CORESET belonging to CORESET pool 0 and also transmits a PDSCH scheduled by the PDCCH. TRP 2 transmits a PDCCH in a CORESET belonging to CORESET pool 1 and also transmits a PDSCH scheduled by the PDCCH.

For a PUSCH, a specific TRP may schedule PUSCH transmission to the UE in a CORESET belonging to a CORESET pool. For example, some PUCCH resources may be scheduled by TRP 1, while the remaining PUCCH resources may be scheduled by TRP 2. The UE may transmit an independent PUSCH/PUCCH for each of TRP 1 and TRP 2.

The UE may recognize PUSCHs (or PUCCHs) scheduled by DCI received based on different CORESETs (or CORESETs belonging to different CORESET groups) as PUSCHs (or PUCCHs) to be transmitted to different TRPs or PUSCHs (or PUCCHs) for different TRPs. In addition, the method for UL transmission (e.g., PUSCH/PUCCH) to different TRPs may be equally applied to UL transmission to different panels belonging to the same TRP.

Herein, a CORESET group ID (or CORESET pool index, which has the same meaning) may refer to an index/identification information (e.g., ID) used to differentiate CORESETs for each TRP/panel. A CORESET group may refer to a group/union of CORESETs that are distinguished by the index/identification information (e.g., ID)/CORESET group ID used to differentiate CORESETs for each TRP/panel. For example, the CORESET group ID may be specific index information defined in a CORESET configuration. In other words, the CORESET group may be configured/indicated/defined by an index defined in the CORESET configuration for each CORESET. Additionally/alternatively, the CORESET group ID may refer to an index/identification information/indicator used to distinguish/identify CORESETs configured for/associated with each TRP/panel.

Herein, the CORESET group ID may be represented as a specific index/specific identification information/specific indicator used to distinguish/identify CORESETs configured for /associated with each TRP/panel. The corresponding information may be configured/indicated through higher layer signaling (e.g., RRC signaling, MAC-CE, etc.) and/or physical layer signaling (e.g., DCI). For example, it may be configured/instructed that PDCCH detection is performed on a per-CORESET group basis for each TRP/panel. It may be configured/instructed that UCI (e.g., CSI, HARQ-ACK/NACK, SR, etc.) and/or UL physical channel resources (e.g., PUCCH/PRACH/SRS resources) are managed/controlled separately on a per-CORESET group basis for each TRP/panel. Additionally/alternatively, a HARQ ACK/NACK (process/retransmission) for a PDSCH/PUSCH scheduled for each TRP/panel may be managed on a per-CORESET group basis.

For example, a higher layer parameter ControlResourceSet information element (IE) may include a CORESET-related ID (e.g., controlResourceSetID), a CORESET pool index for the CORESET (e.g., CORESETPoolIndex), a time/frequency resource configuration for the CORESET, TCI information related to the CORESET, and so on. For instance, the index of the CORESET pool (e.g., CORESETPoolIndex) may be set to 0 or 1. In the present disclosure, the CORESET group may correspond to the CORESET pool, and the CORESET group ID may correspond to the CORESET pool index (e.g., CORESETPoolIndex).

In relation to M-TRP transmission and reception in the Rel-17 NR standardization, M-TRP PDCCH/PDSCH single frequency network (SFN) transmission, S-DCI based M-TRP PUSCH repeated transmission, and single PUCCH resource based M-TRP PUCCH repeated transmission are supported. In these transmission methods, to enhance URLLC targets for increased reliability, the same content (i.e., DCI/UL TB/UCI, etc.) is repeatedly transmitted. In this case, M-TRP PDCCH repeated transmission is performed based on TDM or FDM, M-TRP PDCCH/PDSCH SFN transmission is performed on the same time/frequency/layer, S-DCI based M-TRP PUSCH repeated transmission is performed based on TDM, and single PUCCH resource based M-TRP PUCCH repeated transmission is performed based on TDM.

First, an S-DCI based M-TRP PDCCH repeated transmission method will be described.

In the NR Rel-17 standardization, to support the M-TRP PDCCH repeated transmission, the UE is configured with a plurality of CORESETs with different TCI states (i.e., different QCL RSs), along with a plurality of search space (SS) sets, which are respectively associated with the CORESETs. The BS may indicate/configure to the UE that the SS set associated with one CORESET is linked to the SS set associated with another CORESET for the purpose of repeated transmission. Accordingly, the UE may recognize that PDCCH candidates of the SS sets are being repeatedly transmitted.

For example, if the UE is configured with two CORESETs: CORESET 0 and CORESET 1, CORESET 0 and CORESET 1 are associated with SS set 0 and SS set 1, respectively, and SS set 0 and SS set 1 may be linked with each other. The UE may recognize that the same DCI is repeatedly transmitted on PDCCH candidates of SS set 0 and SS set 1. In addition, the UE may identify, based on specific rules, that a specific PDCCH candidate in SS set 0 and a specific PDCCH candidate in SS set 1 are paired to transmit the same DCI repeatedly. The two PDCCH candidates are referred to as linked PDCCH candidates, and the UE may successfully decode the DCI as long as the UE correctly receives either of the two PDCCH candidates. However, when the UE receives a PDCCH candidate in SS set 0, the UE may use a QCL RS (i.e., DL beam) of a TCI state in CORESET 0 associated with SS set 0. The UE may use a QCL RS (i.e., DL beam) of a TCI state in CORESET 1 associated with SS set 1 when receiving a PDCCH candidate in SS set 1. Thus, the UE may receive the linked PDCCH candidates using different beams.

Next, an M-TRP SFN PDCCH/PDSCH transmission method will be described.

As one form of the M-TRP PDCCH repeated transmission, M-TRPs may transmit the same DCI repeatedly over the same time/frequency/DMRS port, and such a transmission method may be referred to as SFN PDCCH transmission. However, for the SFN PDCCH transmission, instead of configuring a plurality of CORESETs with different TCI states, the BS configures a plurality of TCI states within a single CORESET. When the UE receives a PDCCH candidate through an SS set associated with the single CORESET, the UE may use all of the plurality of configured TCI states to perform channel estimation on a PDCCH DMRS and attempt decoding.

In the above-described M-TRP PDSCH repeated transmission, two TRPs transmit the channel repeatedly on different resources. However, if the resources used by the two TRPs are the same, that is, if the same channel is repeatedly transmitted over the same frequency/time/layer (i.e., DMRS port), the reliability of the channel may be improved. In this case, since the same channel, which is repeatedly transmitted, is not separated by different resources, the channel may be combined during transmission (i.e., in the air) and received as a single channel (e.g., a composite channel) from the perspective of the receiver (e.g., UE). For SFN PDSCH transmission, the UE may be configured with two DL TCI states to receive a PDSCH DMRS.

Next, an S-DCI based M-TRP PUSCH repeated transmission method will be described.

In the NR Rel-17 standardization, for S-DCI based M-TRP PUSCH transmission, the BS may configure two SRS sets for the UE. Each set is used to indicate a UL Tx port, UL beam/QCL information for TRP 1 and TRP 2. In addition, the BS may indicate SRS resources for each SRS resource set through two SRI fields included in a single piece of DCI and may also indicate up to two PC parameter sets. For example, the first SRI field may indicate an SRS resource and power control (PC) parameter set defined in SRS resource set 0, while the second SRI field may indicate an SRS resource and PC parameter set defined in SRS resource set 1. Through the first SRI field, the UE may be provided with the UL Tx port, PC parameter set, and UL beam/QCL information for TRP 1. Thereafter, the UE may perform PUSCH transmission on a TO corresponding to SRS resource set 0. Similarly, through the second SRI field, the UE may be provided with the UL Tx port, PC parameter set, and UL beam/QCL information for TRP 2. Thereafter, the UE may perform PUSCH transmission on a TO corresponding to SRS resource set 1.

Next, a single PUCCH resource based M-TRP PUCCH repeated transmission method will be described.

In the NR Rel-17 standardization, for single PUCCH resource based M-TRP PUCCH transmission, the BS may activate/configure two pieces of spatial relation information for a single PUCCH resource for the UE (in the case of FR1, two PC parameter sets may be activated/configured). When UL UCI is transmitted on the PUCCH resource, each piece of spatial relation information may be used to indicate to the UE the spatial relation information for TRP 1 and TRP 2, respectively. For example, through a value indicated by the first spatial relation information, the UE may be configured with a Tx beam/PC parameter(s) for TRP 1 and use the corresponding information to perform PUCCH transmission on a TO corresponding to TRP 1. Similarly, through a value indicated by the second spatial relation information, the UE may be configured with a Tx beam/PC parameter(s) for TRP 2 and use the corresponding information to perform PUCCH transmission on a TO corresponding to TRP 2.

Additionally, to support the M-TRP PUCCH repeated transmission, the configuration method has been enhanced to allow two pieces of spatial relation information to be configured for a PUCCH resource. That is, when PC parameters such as PLRS, Alpha, P0, and closed loop index are configured for each piece of spatial relation information, a spatial relation RS may be configured. As a result, PC information and spatial relation RS information corresponding to two TRPs may be configured by two pieces of spatial relation information. Accordingly, the UE transmits a UCI PUCCH (i.e., CSI, ACK/NACK, SR, etc.) using first spatial relation information at a first TO and transmits the same UCI PUCCH using second spatial relation information at a second TO. In the present disclosure, a PUCCH resource configured with two pieces of spatial relation information is referred to as an M-TRP PUCCH resource, while a PUCCH resource configured with a single piece of spatial relation information is referred to as an S-TRP PUCCH resource.

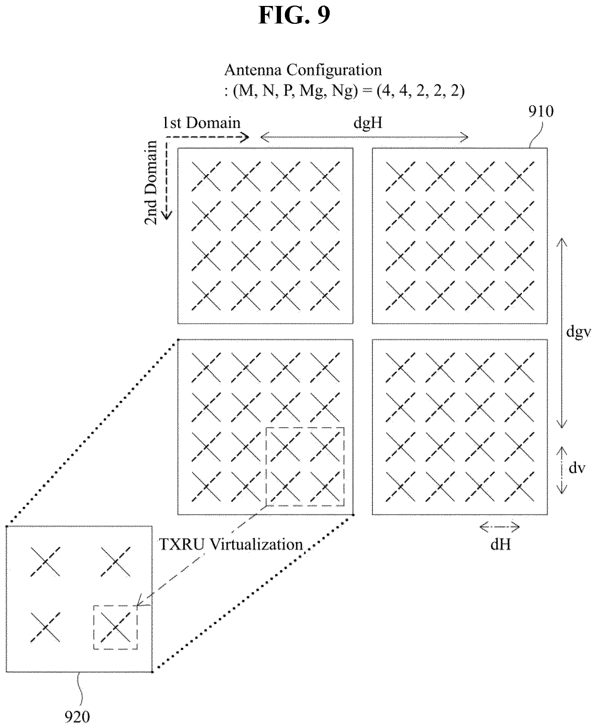

FIG. 9 illustrates an antenna configuration and a port configuration within a panel.

Referring to FIG. 9, an antenna configuration 910 may be configured for a first domain and a second domain, and transmit-receive unit (TXRU) virtualization may be applied to a relationship between the antenna configuration 910 and a port configuration 920.

Regarding the antenna configuration 910, M represents the number of columns in the panel (i.e., the number of antenna ports in the first domain within the panel), N represents the number of rows in the panel (i.e., the number of antenna ports in the second domain within the panel), P represents the polarization (1: co-pol, 2: X-pol), Mg represents the number of panels in the first domain, and Ng represents the number of panels in the second domain. Accordingly, the total number of antenna elements may be expressed as $P*M*N*Mg*Ng$.

For example, the antenna configuration 910 shown in FIG. 9 corresponds to [(M, N, P, Mg, Ng) = (4, 4, 2, 2, 2)]. In FIG. 9, dgH represents a panel spacing in the first domain, dgV represents a channel spacing in the second domain, dH represents an antenna spacing in the first domain, and dV represents an antenna spacing in the second domain.

Regarding the panel configuration 920, N1 represents the number of columns in the first domain (i.e., the number of antenna ports in the first domain within the panel), N2 represents the number of rows in the second domain (i.e., the number of antenna ports in the second domain within the panel), and P represents the polarization (1: co-pol, 2: X-pol). Accordingly, the total number of CSI-RS ports in the panel may be expressed as $P*N1*N2$. For example, the panel configuration 920 shown in FIG. 9 corresponds to [(N1, N2, P) = (2, 2, 2)].

CSI Codebook

A CSI codebook defined in the NR standard (e.g., precoding matrix indicator (PMI) codebook) may be broadly classified into Type I and Type II codebooks. For a better understanding of the codebook, Section 5.2.2.2 of TS 38.214 may be referenced (incorporated by reference).

(1) Type I Codebook

The Type I codebook is primarily targeted at SU-MIMO (Single User MIMO) that supports both high and low orders. The Type I codebook may be divided into (i) single-panel codebooks and (ii) multi-panel codebooks. (i) The single-panel codebook may be based on the assumption that the UE receives DL transmission via a single antenna panel. (ii) The multi-panel codebook may support a BS configuration that uses multiple (e.g., 2 or 4) antenna panels. Unlike the single-panel codebook which supports ranks from 1 to 8, the multi-panel codebook may support ranks from 1 to 4.

The Type I codebook may be configured in terms of the selection of preferred discrete Fourier transform (DFT) vector(s) from an oversampled DFT vector set, which serves as the basis for the spatial domain (SD), and the indication of co-phase for the cross-polarization of BS antennas.

For example, a codebook vector for 1-layer transmission on a one-dimensional (1D) array antenna may be defined based on Equation 1.

[Equation 1]

$$W(l) = \frac{1}{\sqrt{N}} \begin{bmatrix} 1 \\ e^{j\frac{2\pi l}{ON}} \\ e^{j\frac{2\pi l*2}{ON}} \\ ... \\ e^{j\frac{2\pi l*(N-1)}{ON}} \end{bmatrix}$$

In Equation 1, N represents the number of antenna elements in the ID antenna array, and O represents an oversampling factor. The index of the codebook vector, 1 may be 1 = 0, 1, 2, ..., O*N-1. A precoder vector for a 2D antenna array may be defined based on the Kronecker product of two 1D array precoder vectors.

(2) Type II Codebook

The Type II codebook primarily supports MU-MIMO (Multi-User MIMO) which supports up to two layers. Compared to the Type I codebook, the Type II codebook may provide more accurate CSI but may cause an increase in signaling overhead. In the Type II codebook, a PMI may identify a set of beams and a set of amplitude coefficients. The amplitude coefficients may be used to generate a weighted sum of beams. The Type II codebook may also identify the phase shift for co-phasing between beams. The Type II codebook for port selection may support reporting of wideband/-long-term CSI (e.g., i1) and subband/short-term CSI (e.g., i2) based on a precoded (or beamformed) CSI-RS when the BS knows a channel between the UE and the BS.

In the case of the Type II codebook, multiple DFT vectors, which serve as the SD basis, are selected and linearly combined to achieve high resolution and superior MU-MIMO performance.

An enhanced Type II codebook has been introduced to address CSI overhead limitations of the conventional Type II codebook. The enhanced Type II codebook reduces the payload of the codebook by considering the correlation in the frequency domain.

An enhanced Type II codebook vector that constitutes a specific l-th layer may be expressed as shown in Equation 2.

[Equation 2]

$$W^l_{q_1,q_2,n_1,n_2,n_{3,l},p_l^{(1)},p_l^{(2)},i_{2,5,l},t} = \frac{1}{\sqrt{N_1 N_2 \gamma_{t,l}}} \begin{bmatrix} \sum_{i=0}^{L-1} v_{m_1^{(i)},m_2^{(i)}} p_{l,0}^{(1)} \sum_{f=0}^{M_v-1} y_{t,l}^{(f)} p_{l,i,f}^{(2)} \varphi_{l,i,f} \\ \sum_{i=0}^{L-1} v_{m_1^{(i)},m_2^{(i)}} p_{l,1}^{(1)} \sum_{f=0}^{M_v-1} y_{t,l}^{(f)} p_{l,i+L,f}^{(2)} \varphi_{l,i+L,f} \end{bmatrix}$$

$$\gamma_{t,l} = \sum_{i=0}^{2L-1} \left( p_{l,\lfloor\frac{i}{L}\rfloor}^{(1)} \right)^2 \left| \sum_{f=0}^{M_v-1} y_{t,l}^{(f)} p_{l,i,f}^{(2)} \varphi_{l,i,f} \right|^2$$

In Equation 2, 1 is defined as l=1, 2 ,3, 4 and N1 and N2 represent the lengths of first and second SDs for each BS (or each port group). The term $v_{m1}(i), {}_{m2}(j)$ (where i = 0, 1, ..., L-1) refer to L SD DFT vectors selected for linear combining (for example, the term $v_{m1}(i), {}_{m2}(j)$ may be a 1D DFT vector or 2D DFT vector, depending on the antenna configuration of each BS). The codebook vector is determined by the parameters $q_1, q_2, n_1, n_2$, which corresponds to the parameters introduced to select optimal L beams out of a total of Q1*N1*Q2*N2 beams (where Q1 and Q2 are oversampling factors for the first and second domains, respectively). In addition, $n_3$ is a parameter introduced to select the frequency domain (FD) DFT basis, and $p_l^{(1)}$ and $p_l^{(2)}$ correspond to amplitude coefficients. Moreover, $p_l^{(1)}$ is an indicator with a 4-bit quantization level that indicates a relative amplitude based on the largest value (based on the polarization that contains the strongest coefficient) among the strongest coefficients (p_ref) per polarization for each layer. It uses 4 bits to indicate the relative amplitude, $p_l^{(2)}$ is an indicator that represents a relative amplitude with three bits, based on **p_ref** within each polarization. The four-bit phase coefficient indicator is $i_{,2,5,l}$, which is associated with φl,i,f. Further, t represents a frequency domain index (t = 0, ..., N3-1) (for example, a PRB or a group of subbands), which may correspond to each element of an FD basis vector $y_{t,l}^{(f)}$, which is an N3-length DFT vector.

## Codebook for Coherent Joint Transmission (CJT)

When a plurality of BSs or a BS with multiple panels performs DL transmission to the UE based on CJT, precise codebook design is necessary to enhance performance. Hereinafter, a codebook for CJT will be described. Specifically, a Type II series CJT codebook based on linear combining will be described. In addition, an antenna port and CSI-RS configurations related to CJT and the CJT codebook will also be described

For CJT, it may be assumed that the plurality of BSs are connected via an ideal backhaul, and thus, the BSs are considered to be mutually synchronized.

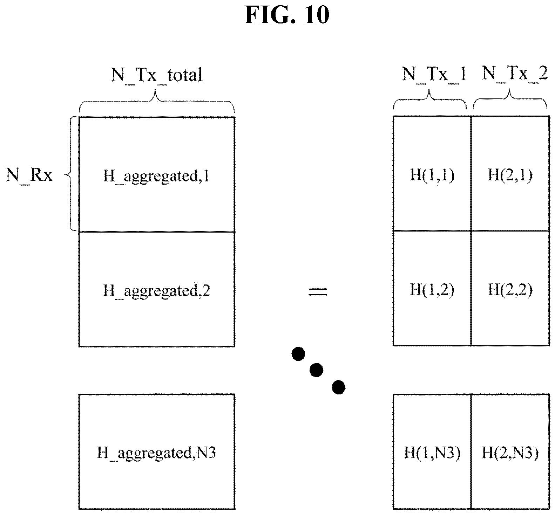

FIG. 10 illustrates an aggregated channel for CJT, which is assumed for the sake of explanation.

Referring to FIG. 10, N_Tx_total represents the total number of Tx antennas of TRPs participating in CJT, and N_Tx_i represents the number of Tx antennas of an i-th TRP. Assuming CJT with two TRPs, N_Tx_total = N_Tx_1 + N_Tx_2. N_Rx represents the number of reception antennas of the UE. N3 represents the number of frequency units configured for the UE (e.g., the number of frequency resource regions). For example, N3 subbands may be configured. For instance, the value of N3 may be defined by the number of RBs, the number of REs, and/or the number of groups of REs/RBs. H(i,j) represents a channel value corresponding to a j-th frequency unit between the UE and the i-th TRP.

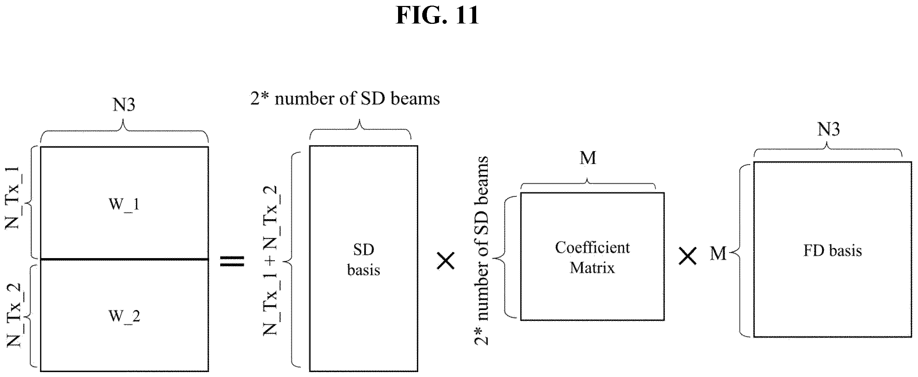

FIG. 11 illustrates an example of an enhanced Type II codebook for CJT. The codebook shown in FIG. 11 may be a Rel-16 (eType II) codebook configured on the assumption of the channel shown in FIG. 10.

In FIG. 11, W_1 and W_2 represent final precoding matrices corresponding to Tx antennas of each TRP. This may be mathematically expressed as shown in Equation 3.

[Equation 3]

$$W = \frac{1}{\sqrt{\eta}} W_{SD} * W' * W_{FD}^H$$

In Equation 3, H represents the Hermitian operation (conjugate transpose), but H may be replaced with a simple transpose operation depending on the FD basis design. In addition, η represents a normalization term.

The SD basis and FD basis are configured with DFT-based vectors. The SD basis may be determined as either a 2D DFT or 1D DFT depending on the antenna structure of the TRP. In the SD basis, the number of SD beams multiplied by 2 is a result of assuming X-pol antennas. In addition, M represents the number of FD bases. The SD/FD DFT vector is merely an example, and other SD/FD basis vectors may also be used.

For example, a DFT vector may be configured as shown in Equation 4.

[Equation 4]

$$u_m = \begin{bmatrix} 1 & e^{j\frac{2\pi m}{O_2 N_2}} & \cdots & e^{j\frac{2\pi m(N_2-1)}{O_2 N_2}} \end{bmatrix} \; when \; N_2 > 1 \quad ,$$

$$u_m = 1 \; when \; N_2 = 1$$

$$v_{l,m} = \begin{bmatrix} 1 & e^{j\frac{2\pi l}{O_1 N_1}} u_m & \cdots & e^{j\frac{2\pi l(N_1-1)}{O_1 N_1}} u_m \end{bmatrix}$$

In Equation 4, N1 and N2 represent the number of antennas in the first domain and the second domain for each TRP, respectively (e.g., the number of antennas per polarization). O1 and O2 represent oversampling factors for the first and second domains. As shown in Equation 4, when $N_2 > 1$, $v_{l,m}$ becomes a 2D DFT.

As illustrated in FIG. 11, the codebook considered in the present disclosure may be broadly divided into three parts: an SD basis part, a coefficient matrix part, and an FD basis part.

First, the SD basis part will be described with reference to Equation 5. For the sake of explanation, it is assumed that two TRPs are associated with each other.

$$[\text{Equation 5}]$$

$$W_{SD} = \begin{bmatrix} b_1 & \cdots & b_L & & \mathbf{0} & \\ & \mathbf{0} & & b_1 & \cdots & b_L \end{bmatrix}, where\ b_i \in C^{\frac{N_{Tx}}{2} \times 1}$$

In Equation 5, $b_i$ is an i-th SD basis vector, and the size thereof is $N_{TX}/2$. In addition, bi may be replaced with $v_{l,m}$ which has a size of $N_{Tx}$ (e.g., $v_{l,m}$ in Equation 4). L represents the number of SD basis vectors that are linearly combined. The reason that Equation 5 is structured in the form of block diagonalization is due to the consideration of an X-pol antenna present in the BS (or TRP).

The SD basis part of Equation 5 is an example that considers having the same number of SD basis vectors for each polarization and the same SD basis vectors for each polarization. This may be suitable for a single TRP.

In an embodiment, the SD basis part of Equation 5 may be reconfigured to be suitable for M-TRPs. Equation 6 provides an example of the SD basis part for CJT between M-TRPs.

$$[\text{Equation 6}]$$

$$W_{SD} = \begin{bmatrix} b_{1,1} & \cdots & b_{1,L_1} & 0 & \cdots & 0 & 0 & \cdots & 0 & 0 & \cdots & 0 \\ 0 & \cdots & 0 & b_{2,1} & \cdots & b_{2,L_2} & 0 & \cdots & 0 & 0 & \cdots & 0 \\ 0 & \cdots & 0 & 0 & \cdots & 0 & b_{1,1} & \cdots & b_{1,L_1} & 0 & \cdots & 0 \\ 0 & \cdots & 0 & 0 & \cdots & 0 & 0 & \cdots & 0 & b_{2,1} & \cdots & b_{2,L_2} \end{bmatrix}$$

$$, where\ b_{i,j} \in C^{\frac{N_{Tx,i}}{2} \times 1}$$

In Equation 6, $b_{i,j}$ is a j-th (j = 1, ..., Li) SD basis vector corresponding to an i-th (i = 1, ..., M) TRP, and the size thereof is $N_{Tx,i}/2$. Here, $b_{i,j}$ may be replaced with $v_{l,m}$.

As seen in Equation 6, in the case of the SD basis, the SD base and the number (Zi) thereof may be independently selected for each TRP. For example, $L_i$ may $L_i \in \{2,4,6\}$.

In Equation 6, an example of polarization-common SD basis selection is illustrated. However, the present disclosure is not limited thereto.

If Equation 6 is configured more flexibly, Equation 6 may be reconfigured as shown in Equation 7.

$$[\text{Equation 7}]$$

$$W_{SD}$$

$$= \begin{bmatrix} b_{1,1,1} & \cdots & b_{1,1,L_{1,1}} & 0 & \cdots & 0 & 0 & \cdots & 0 & 0 & \cdots & 0 \\ 0 & \cdots & 0 & b_{2,1,1} & \cdots & b_{2,1,L_{2,1}} & 0 & \cdots & 0 & 0 & \cdots & 0 \\ 0 & \cdots & 0 & 0 & \cdots & 0 & b_{1,2,1} & \cdots & b_{1,2,L_{1,2}} & 0 & \cdots & 0 \\ 0 & \cdots & 0 & 0 & \cdots & 0 & 0 & \cdots & 0 & b_{2,2,1} & \cdots & b_{2,2,L_{2,2}} \end{bmatrix}$$

$$, where\ b_{i,p,j} \in C^{\frac{N_{Tx,i}}{2} \times 1}$$

In Equation 7, $b_{i,p,j}$ is an j-th (where j = 1,..., $L_{i,p}$) SD basis vector corresponding to p-th polarization (where p = 1, 2) within an i-th (where i = 1,..., M) TRP, and the size thereof is $N_{Tx,i}/2$. Here, $b_{i,p,j}$ may be replaced with $v_{l,m}$.

As seen in Equation 7, the SD base and the number thereof ($L_{i,p}$) may be independently selected for each TRP and each polarization. Additionally, the oversampling factor and/or the type of basis used to configure the SD basis (e.g., DFT, discrete cosine transform (DCT), etc.) may also be independently configured for each TRP.

In Equations 6 and 7, the order of blocks is expressed as follows: first polarization of TRP 1 → first polarization of TPR 2→ second polarization of TRP 2 → second polarization of TRP 2. However, the present disclosure is not limited to this order. For example, the order may vary depending on the CSI-RS configuration and/or antenna port mapping.

Next, the coefficient matrix part will be described. Since the coefficient matrix is used for combining the SD basis part and the FD basis part, the coefficient matrix may also be referred to as a combining matrix (e.g., W' in Equation 3). The dimension size of the combining matrix is 2L-by-M based on Equation 5.

Specifically, considering Equation 6, the dimension size of the combining matrix may be expressed as shown in Equation 8. Considering Equation 7, the dimension size of the combining matrix may be expressed as shown in Equation 9.

$$[\text{Equation 8}]$$

$$2\sum_{i=1}^{M} L_i\text{-by-M}$$

$$[\text{Equation 9}]$$

$$\sum_{i=1}^{M} \sum_{p=1}^{2} L_{i,p}\text{-by-M}$$

The elements of the combining matrix are complex values, which may be divided into an amplitude part and a phase part.

In the conventional legacy codebook configuration method, the amplitude is configured in two steps. The amplitude between different polarizations is quantized using four bits. (Specifically, the strongest coefficient for each polarization is selected, and among these two coefficients, the larger one is set as 1. The amplitude of the remaining polarization is then quantized using four bits.) Tables 7 and 8 show amplitude values corresponding to four-bit and three-bit quantization payloads, respectively.

[Table 7]

| Index | 1 | 2 | 3 | 4 | 5 | ... | 15 | 16 |
|-------|---|---|---|---|---|-----|----|----|
| Value | 1 | $(\frac{1}{2})^{\frac{1}{4}}$ | $(\frac{1}{4})^{\frac{1}{4}}$ | $(\frac{1}{8})^{\frac{1}{4}}$ | $(\frac{1}{16})^{\frac{1}{4}}$ | | $(\frac{1}{2^{14}})^{\frac{1}{4}}$ | *Reserved* |

[Table 8]

| Index | 1 | 2 | 3 | ... | 7 | 8 |
|-------|---|---|---|-----|---|---|
| Value | 1 | $\frac{1}{\sqrt{2}}$ | $\frac{1}{2}$ | | $\frac{1}{8}$ | $\frac{1}{8\sqrt{2}}$ |

The phase is configured using four bits (e.g., 16-PSK), and four-bit quantization is performed based on the strongest coefficient.

To enhance the performance of CSI measurement and reporting in CJT between M-PRTs, the following proposals may be considered.

## Proposal 1

For a codebook used in CJT between M-TRPs, a per-TRP strongest coefficient may be introduced. The per-TRP strongest coefficient may be quantized based on granularity (at different levels).

For example, the UE may apply a strongest coefficient indicator (SCI), which provides information indicating the strongest coefficient, as follows.

- Alt 1. Considering a TRP-specific SD basis, one strongest coefficient representing the SD basis for each TRP. Among multiple coefficients selected for multiple TRPs, the largest value may be considered the reference (e.g., 1) (if there are identical values, the coefficient selection may be performed in the order of the lowest/highest TRP or CSI-RS index). The amplitude and phase of the remaining coefficients may then be configured with respect to the reference coefficient.

- Alt 2. In the case of a TRP-common SD basis and TRP-specific FD basis, one strongest coefficient representing the FD basis for each TRP (from among coefficients corresponding to each basis) is selected. Among multiple coefficients selected for multiple TRPs, the largest value may be selected as the reference (e.g., 1), and the amplitude and phase of the remaining coefficients may be configured with respect to the reference value (for example, if there are identical values, the selection may be performed in the order of the lowest/highest TRP or CSI-RS index).
- Alt 3. Considering a TRP-common SD/FD basis, only the strongest coefficient for each polarization may be considered, similar to the legacy operation.

A combination of Alt 1 and Alt 2 may also be used.

The strongest coefficient (SC) for each polarization may also be considered. For example, it is assumed that TRP1 has two candidate SCs for polarizations, and TRP2 also has two candidate SCs for polarizations. In this case, the largest SC among the total of four SCs becomes the reference for the SCI, and the remaining SCs may be quantized based on the reference SC.

To enhance signaling efficiency, the number of bits for indicating the SCI may be determined based on Equation 10.

[Equation 10]

$$\left\lceil \log_2 \sum_{i=1}^{M} \sum_{p=1}^{2} L_{i,p} \right\rceil$$

It may be assumed that the index of the FD basis corresponding to the SCI is remapped to the first position (e.g., 0). Thus, the indication for the FD basis may be omitted.

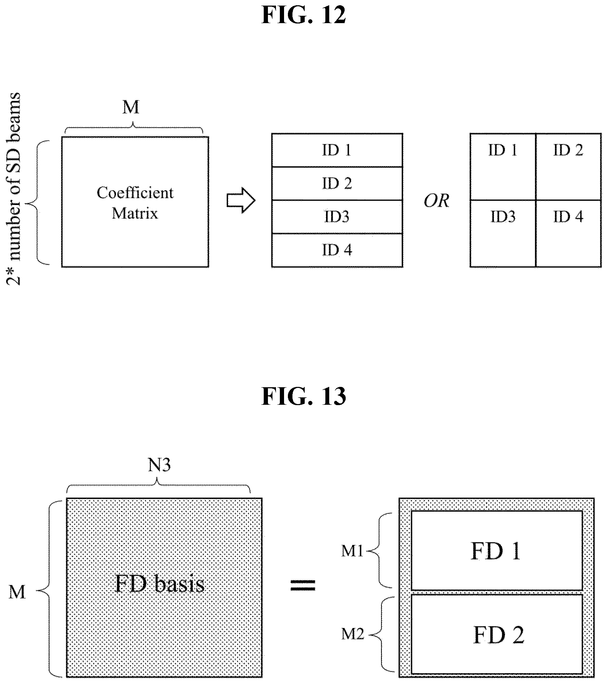

For more efficient signaling, an ID indicating the position of the coefficient corresponding to the SCI may be introduced. For example, a TRP/Pol ID may be introduced. FIG. 12 illustrates an example of a TRP/Pol ID. Referring to FIG. 12, a part corresponding to each TRP and/or polarization in the coefficient matrix may be defined, and the part corresponding to each TRP and/or polarization may be reported.

In addition to or separately from the above-described SCI indication (different from legacy operations), the phase may also be quantized for each TRP, which is intended to fine-tune the phase between TRPs. To this end, the phase may be configured to have different granularity between TRPs. That is, the phase granularity for an inter-TRP and intra-TRP may be configured differently and independently. For example, the inter-TRP may be configured with a relatively larger granularity and/or higher bit-width (e.g., 8 or 16-PSK or a rotated version of 8 or 16-PSK), while the intra-TRP may be configured with a smaller granularity and/or lower bit-width. Table 9 provides an example of configuring different phase granularities for the inter-TRP and intra-TRP. However, the present disclosure is not limited to thereto.

[Table 9]

| | Granularity |
|---|---|
| inter TRP | $\left(\{e^{\frac{j\pi}{16}}, e^{\frac{j3\pi}{16}}, e^{\frac{j5\pi}{16}}, \ldots, e^{\frac{j31\pi}{16}}\}\right)$ <br> 8 or 16-PSK or 16 PSK-rotation |
| intra TRP | $\{e^{-\frac{j\pi}{32}}, e^{-\frac{j2\pi}{32}}, e^{\frac{j\pi}{32}}, e^{\frac{j2\pi}{32}}\}$ or $\{e^{\frac{j\pi}{64}}, e^{\frac{j2\pi}{64}}, e^{\frac{j3\pi}{64}}, e^{\frac{j4\pi}{64}}\}$ or 1-bit $\{e^{-\frac{j\pi}{16}}, e^{\frac{j\pi}{16}}\}$ <br> 2-bit |

For example, the amplitude may also be reported with an independent and different granularity for each TRP in a similar way to the phase. To this end, an offset value for the strongest coefficient corresponding to the SCI may also be additionally reported. In the Rel-16 Type II codebook, the amplitude may be indicated using $i_{2,3,l}$ (per polarization) and $i_{2,4,l}$ (per coefficient) with four bits and three bits, respectively. For $i_{2,3,l}$, a difference of up to -10.5 dB may be reported with intervals of approximately 0.75 dB. For $i_{2,4,l}$, a difference of up to -10.5 dB may be reported with intervals of approximately 1.5 dB. Therefore, the structure allows for reporting coefficients with a difference of up to -21 dB.

For example, in a 3-TRP CJT scenario, when such a structure is applied to a CJT codebook, SCs corresponding to TRP1, TRP2, and TRP3 are named SC1, SC2, and SC3, respectively. In addition, it is assumed that SC1 is the largest, and the amplitudes of SC2 and SC3 are -3 dB and -6 dB relative to SC1, respectively. In this case, from the perspective of TRP2, the difference may only be reported up to -18 dB relative to SC2. Similarly, the coefficient corresponding to TRP3 may be reported up to -21 dB relative to SC1, but from the perspective of TRP3, there is a limitation that only up to -15 dB is reported relative to SC3. To overcome this limitation, offset values of 3 dB and 6 dB relative to the largest SC may be reported for TRP2 and TRP3, respectively.

**Proposal 2**

For an M-TRP CJT codebook, a per-TRP bitmap is proposed in addition to the selection of non-zero coefficients.

In the current Rel-16 Type II codebook, the selection of non-zero coefficients is determined by the UE based on values configured by RRC parameters. Specifically, the number of non-zero coefficients per layer is limited to $K_0$=ceiling ($\beta L M_1$), where $\beta$ is a parameter indicated by the RRC. Across layers, the total number of non-zero coefficients is limited to $2K_0$.

According to an example of the present disclosure, for the CJT codebook, information on the number of non-zero coefficients (i.e., a parameter that limits the number of non-zero coefficients) may be configured or indicated on a per-TRP basis. To this end, a new parameter may be defined. For example, Equation 11 provides one possible condition for determining the number of non-zero coefficients in the CJT codebook.

$$[\text{Equation 11}]$$

$$\sum_{s=0}^{L_i} \sum_{f=0}^{M_i} k_{i,l,s,f} \leq K_{o,i}$$

In Equation 11, $k_{i,l,s,f}$ is an amplitude on-off indicator for the *l*-th layer, s-th SD basis, and *f*-th FD basis of an *i*-th TRP, which has a value of 0 if $k_{i,l,s,f}$ is 0 and a value of 1 if $k_{i,l,s,f}$ is a positive non-zero value. The value of $K_{o,i}$ represents the total number of maximum non-zero power coefficients that are configured for the *i*-th TRP. The restriction across layers is equally configured as $\alpha_i{*}K_{o,i}$ (where $\alpha_i$ is a non-negative integer). A scaling factor $\alpha_i$ may also be configured on a per-TRP basis.

As described above, an upper bound is imposed on the number of non-zero power coefficients, thereby allowing the BS to control the total payload size (e.g., CSI of the UE such as PMI reporting).

However, in the case of CJT, depending on the channel conditions, there may be instances where all the non-zero coefficients of a specific TRP are turned off. For example, if transmission is performed with relatively low power to satisfy the upper bound, all the non-zero coefficients of the specific TRP may be turned off, which may ultimately lead to performance degradation.

To address this issue, a lower bound (e.g., $K_{lower,o,i}$) (e.g., the minimum number) on the number of non-zero coefficients per TRP may be configured or defined. For instance, the number of non-zero coefficients may satisfy Equation 12.

$$[\text{Equation 12}]$$

$$K_{lower,o,i} \leq \sum_{s=0}^{L_i} \sum_{f=0}^{M_i} k_{i,l,s,f} \leq K_{o,i}$$

According to Equation 12, it may prevent all the non-zero coefficients of the specific TRP from being turned off.

For example, information on TRPs (and/or polarizations) where non-zero coefficients are turned on-off (e.g., a bitmap or bit string) (hereinafter referred to as a first bitmap for convenience of explanation) may be newly defined. For instance, when there is an excessively large difference in power ratios between TRPs, if a specific TRP needs to be turned off, the UE may report the on-off status of each TRP (and/or polarizations) through the first bitmap.

To report the on-off status of each TRP (and/or polarization), the TRP/pol polarization ID described above in Proposal 1 may be utilized.

For example, information on the on-off status of each TRP (and/or polarization) (e.g., the first bitmap) may be included in Part 1 CSI. Alternatively, if the number of bases per TRP/ polarization is the same, the total number of IDs constituting the CJT codebook may be reported through Part 1 CSI, thereby reducing overhead.

If the UE reports only non-zero coefficients by while excluding zero coefficients from a coefficient matrix (or vector), a bitmap (hereafter referred to as a second bitmap) may be provided to indicate the positions of the reported non-zero coefficients. The size of the second bitmap (e.g., the number of bits) is 2L-by-M, and the second bitmap may be reported for each layer. As described above, L represents the number of SD base (vectors), and M represents the number of FD base (vectors). Considering X-pol antennas, the value of F*D is multiplied by 2.

A combination of the method of reporting information on the on-off status of each TRP (e.g., the first bitmap) (based on TRP-related IDs) and the second bitmap may be considered. For example, a combination of the first bitmap and the second bitmap (e.g., a combined bitmap) may be reported, or the first bitmap and the second bitmap may be reported in a distinguishable manner, either together or separately (e.g., a 2-step bitmap).

For example, the first bitmap may be used to determine or identify TRPs for CJT transmission that are not turned off (e.g., TRP/polarization-related IDs). In addition, the second bitmap may be provided for TRPs/polarizations (that are determined or identified as not being turned off through the first bitmap),

The second bitmap for the TRPs that are turned off and thus not participating in CJT transmission can may omitted, thereby reducing the signaling overhead in CSI reporting.

For example, it is assumed that there are three TRPs available for CJT, and based on the channel measurement and calculation by the UE, TRP 1 and TRP3 are selected to form the CJT codebook except for TRP2. The UE may, for example, configure a first bitmap for the TRPs that includes a binary value of 101, and this first bitmap may be included in Part 1 CSI. The second bitmap may be constructed based on an intra-TRP. For instance, the size of the second bitmap might be $2L_i*M_i$ (where i = 1, 3), and the second bitmap may be used to report information on the positions of non-zero power coefficients for the corresponding TRPs. For example, the second bitmap may be included in Part 2 CSI. However, the present disclosure is not limited thereto.

For example, the configuration for an FD basis may also be reported on a per-TRP basis, similar to an SD basis.

FIG. 13 is a diagram for explaining a per-TRP based FD basis.

In FIG. 13, a column vector $y_m^H$ of the FD basis may be expressed as shown in Equation 13.

[Equation 13]

$$y_m^H = \begin{bmatrix} 1 & e^{j\frac{2\pi f}{O_i N_3}} & ... & e^{j\frac{2\pi f(N_3-1)}{O_i N_3}} \end{bmatrix},$$

where m=0, .... ...., $M_i$-1

In Equation 13, $O_i$ represents an oversampling factor. $O_i$ may be configured on a per-TRP basis.

To effectively determine and report the FD basis, the following two-step approach may be considered. For example, (i) a process where a common part is selected across all TRPs and (ii) a process where TRP-specific selection is made for the selected part may be considered. For example, the selection of the TRP-common part may be predetermined as an agreement between the BS and UE. When m=0, ..., M*O-1 (that is, assuming that the values of M and O are the same across all TRPs), the BS may divide M*O FD base into the predetermined or agreed part. That is, the FD base may be divided as follows: FD basis set1 = {0, ..., M*O/4-1}, FD basis set2 = {M*O/4, ..., 2M*O/4-1}, FD basis set3 = {2M*O/4, ..., 3M*O/4-1}, and FD basis set4 = {3M*O/4, ..., M*O-1}. The UE may (i) select a common set from the FD basis sets and (ii) select a specific number of FD base for each TRP during second selection. This method offers the advantage of reducing payload overhead through subset selection.

The length of the FD basis is set to N3, where N3 may depend on the number of subbands (SBs) configured for CSI reporting of the UE. The value of N3 may be affected by the value of R, which represents the multiplicative relationship between a PMI SB granularity and a CQI SB granularity. For example, if R = 1, then the PMI SB granularity is equal to the CQI SB granularity. If R = 2, the relationship of 2*PMI SB granularity = CQI SB granularity is satisfied.

For instance, the value of R may be configured separately for each TRP, and then the TRP may operate independently. Alternatively, to unify the R values across the TRPs, the UE may assume either the larger or smaller R value and then configure a codebook. For example, if TRP1 has an R value of 1 and TRP2 has an R value of 2, the UE may set a common R value of either 1 or 2 for a CJT codebook. Alternatively, the UE may not expect different or independent R values to be configured for each TRP. For example, a common R value may be configured for the CJT codebook.

Table 10 summarizes the consensus reached during recent standardization processes regarding the design of the CJT codebook.

[Table 10]

| On the Type-II codebook refinement for CJT mTRP, regarding W2 quantization group and Strongest Coefficient Indicator (SCI) design, for each layer, down-select one from the |
| --- |
| following alternatives:<br>• Alt1. One group comprises one polarization across all TRPs/TRP-groups ($C_{group,phase}$=1, $C_{group,amp}$=2), one (common) SCI across all TRPs/TRP groups<br>• Alt2. One group comprises one polarization for one TRP/TRP-group ($C_{group,phase}$=N, $C_{group,amp}$=2N), per-TRP/TRP-group SCI<br>  ∘ FFS: Quantization of N strongest coefficients<br>• Alt3. One group comprises one polarization for one TRP/TRP-group with a common phase reference across TRPs/TRP-groups ($C_{group,phase}$=1, $C_{group,amp}$=2N)<br>  ∘ FFS: SCI, per-TRP/TRP-group vs. one (common) SCI across all TRPs/TRP groups<br>  ∘ FFS: Quantization of N strongest coefficients |

(continued)

| • Alt4. For a selected TRP/TRP-group, one group comprises one polarization, and for remaining N-1 TRPs/TRP-groups, one group comprises one polarization across remaining N-1 TRPs/TRP-groups ($C_{group,amp}$=2+2=4), with a common phase reference across all of N TRPs/TRP-groups ($C_{group,phase}$=1)<br>∘ FFS: The selected TRP/TRP-group<br>FFS: The need for "strongest" TRP/TRP-group indicator in addition to SCI(s) |

The present disclosure proposes the following additions to the consensus on Alt1 in Table 10. Tables 11 and 12 are the four-bit and three-bit amplitude tables used in Type II CSI (Rel-16/17) as defined in TS 38.214.

[Table 11]

| $k_{l,p}^{(1)}$ | $p_{l,p}^{(1)}$ |
|---|---|
| 0 | Reserved |
| 1 | $\dfrac{1}{\sqrt{128}}$ |
| 2 | $\left(\dfrac{1}{8192}\right)^{1/4}$ |
| 3 | $\dfrac{1}{8}$ |
| 4 | $\left(\dfrac{1}{2048}\right)^{1/4}$ |
| 5 | $\dfrac{1}{2\sqrt{8}}$ |
| 6 | $\left(\dfrac{1}{512}\right)^{1/4}$ |
| 7 | $\dfrac{1}{4}$ |
| 8 | $\left(\dfrac{1}{128}\right)^{1/4}$ |
| 9 | $\dfrac{1}{\sqrt{8}}$ |
| 10 | $\left(\dfrac{1}{32}\right)^{1/4}$ |
| 11 | $\dfrac{1}{2}$ |

(continued)

| $k_{l,p}^{(1)}$ | $p_{l,p}^{(1)}$ |
|---|---|
| 12 | $\left(\dfrac{1}{8}\right)^{1/4}$ |
| 13 | $\dfrac{1}{\sqrt{2}}$ |
| 14 | $\left(\dfrac{1}{2}\right)^{1/4}$ |
| 15 | 1 |

[Table 12]

| $k_{l,i,f}^{(2)}$ | $p_{l,i,f}^{(2)}$ |
|---|---|
| 0 | $\dfrac{1}{8\sqrt{2}}$ |
| 1 | $\dfrac{1}{8}$ |
| 2 | $\dfrac{1}{4\sqrt{2}}$ |
| 3 | $\dfrac{1}{4}$ |
| 4 | $\dfrac{1}{2\sqrt{2}}$ |
| 5 | $\dfrac{1}{2}$ |
| 6 | $\dfrac{1}{\sqrt{2}}$ |
| 7 | 1 |

In the 4-bit table of Table 11, each index is designed to decrease by -1.5 dB, and in the 3-bit table of Table 12, each index is designed to decrease by -3 dB. To enhance this design, the following methods may be considered:

- (a) For CJT, the bit width of the tables in Table 11 and Table 12 may be increased. For example, the 3-bit table with a scale of -3 dB may be expanded to a 4-bit table, or the existing 4-bit table with a scale of -1.5 dB may be expanded to a 5-bit table. As a more flexible application and configuration method, the BS may configure at least one of information on a bit-width or information on a step size. For example, different or independent values may be configured or indicated for each TRP.
- (b) The existing table size (e.g., 4-bit or 3-bit) may be maintained, while the differential value (i.e., step size) may vary.

For example, instead of -1.5 dB, the step size may be changed to -0.75 dB or a larger value such as -6 dB. As described above, the step size may be a value configured by the BS, and a different value may be configured/indicated for each TRP.

- (c) In examples (a) and (b), the UE may report preferred values to the BS, and based on the preferred values of the UE, the BS may configure and indicate a table configuration method.

- (d) The UE may be configured with a plurality of tables, and which table is used may be configured or indicated on a per-TRP basis. In this example, if a new table with a size of four bits and a step size of -3 dB is defined, a total of three tables (including the two existing tables and the new table) may be configured for the UE. An actual table to be used may then be configured or indicated by the BS for each TRP.

In the above description, information on the TRP may be distinguished by a TRP index, a cell ID, CORESETPoolIndex, a (SSB) beam index, or a TCI state index.

The above-described proposals may be applied separately or in combination. The feasibility thereof is evident.

The aforementioned proposals may be applied not only in CJT environments but also in dynamic point switching (DPS), non-coherent joint transmission (NCJT), and so on.

As a further extended example, in the above descriptions, a plurality of TRPs may be replaced with a plurality of panels or a plurality of beams within a single BS.

Signals transmitted from different BSs/TRPs/panels/beams may be distinguished from those transmitted from the same BS/TRP/panel/beam from the perspective of UE reception due to differences in long-term fading characteristics such as path loss, average delay, and average Doppler shift. In addition, the signals may differ in that a beam applied by the UE for reception (QCL with respect to the spatial Rx parameter, i.e., QCL type D in TS38.214) may vary.

In the above description, antenna ports transmitted/received from the same TRP may be considered as QCLed antenna ports (e.g., CSI-RS antenna ports within the same CSI-RS resource), while antenna ports transmitted/received from different TRPs may be considered as non-QCLed antenna ports (e.g., CSI-RS antenna ports in different CSI-RS resources). For example, in a CJT environment, the UE may be configured with a per-TRP CSI-RS resource. A plurality of CSI-RS resources may be configured for the UE, and each CSI-RS resource may be associated with each TRP. In this scenario, each bit of the first bitmap, which is used to indicate the on/off status of the TRP, may be linked to each CSI-RS resource.

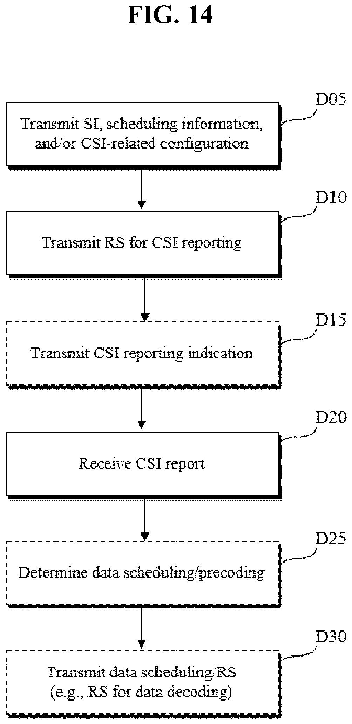

FIG. 14 illustrates operations of a BS performing a CSI procedure based on at least some of the proposals described above.

Referring to FIG. 14, the BS may transmit system information (SI), scheduling information, and/or a CSI-related configuration (e.g., refer to Section 4.1.2 CSI Reporting Setting/CSI-RS Resource Setting) to the UE via higher layers (e.g., RRC or MAC CE) (D05). For example, the CSI-related configuration may include CSI-related information that the BS transmits to the UE based on the proposed methods described above (e.g., padding pattern, padding scheme, indicator indicated by RI restriction, Type I CSI feedback configuration, Type II CSI feedback configuration, etc.).

The BS may transmit an RS (e.g., SSB/CSI-RS/TRS/PT-RS) to the UE to receive a channel state report from the UE (D10). The BS may also transmit an indication regarding CSI reporting to the UE (D15). For example, in the case of aperiodic CSI reporting, the indication may be provided through CSI reporting triggering DCI. Alternatively, in the case of semi-persistent CSI reporting or periodic CSI reporting, step D15 step may be omitted. Steps D10 and D15 may be reordered or merged into a single step.

The BS may receive channel state information, i.e., CSI (e.g., CRI/RI/CQI/PMI/LI) from the UE (D20). For example, the BS may receive the CSI, which is determined/calculated based on the aforementioned proposed methods, from the UE.

Based on the CSI reported by the UE (and/or considering the CSI reported by the UE along with other UEs served by the BS), the BS may determine/calculate data scheduling and precoding (D25). The BS may then transmit the data to which the determined precoding is applied along with an RS for data decoding (e.g., DMRS, TRS, PT-RS) to the (scheduled) UE (D30). In some cases, step D30 may be omitted.

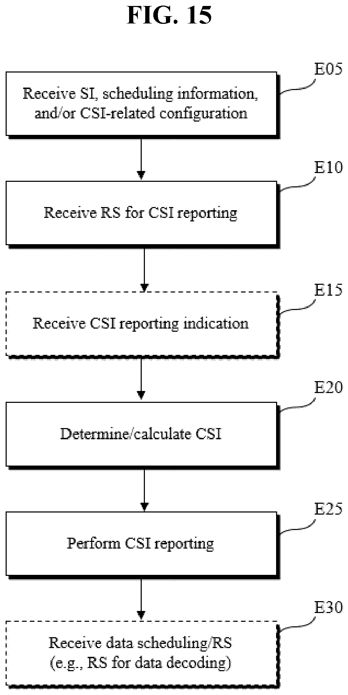

FIG. 15 illustrates operations of a UE performing a CSI procedure based on at least some of the aforementioned proposals.

Referring to FIG. 15, the UE can receive SI, scheduling information, and/or a CSI-related configuration (e.g., refer to Section 4.1.2 CSI Reporting Setting/CSI-RS Resource Setting) from a BS via higher layers (e.g., RRC or MAC CE) (E05). For example, the CSI-related configuration may include CSI-related information that the BS transmits to the UE based on the proposed methods described above (e.g., padding pattern, padding scheme, indicator indicated by RI restriction, Type I CSI feedback configuration, Type II CSI feedback configuration, etc.).

The UE may receive an RS related to channel state reporting (e.g., SSB/CSI-RS/TRS/PT-RS) from the BS (E10). The UE may also receive an indication for CSI reporting from the BS (E15). For example, in the case of aperiodic CSI reporting, the indication may be provided through CSI reporting triggering DCI. Alternatively, in the case of semi-persistent CSI reporting or periodic CSI reporting, step E15 may be omitted. Steps E10 and E15 may be reordered or merged into a single step.

The UE may determine/calculate CSI based on the received RS and information configured by the BS (e.g., information on the CSI-related configuration/reporting settings or information indicated by DCI) (E20) and then report (transmit) the CSI to the BS (E25). For example, the UE may apply the above-described proposed methods in determining/calculating the CSI, and the information included in the reported CSI (e.g., CQI, PMI, RI, LI, etc.) may also be configured/determined based on the proposed methods.

The UE may receive data and/or an RS (for data decoding) based on data scheduling information from the BS (E30). In this case, the data scheduling and precoding applied to the data may be determined/calculated by the BS based on the CSI reported by the UE, but the data scheduling and the precoding applied to the data may not be solely based on the CSI reported by the UE. In some cases, step E30 may be omitted.

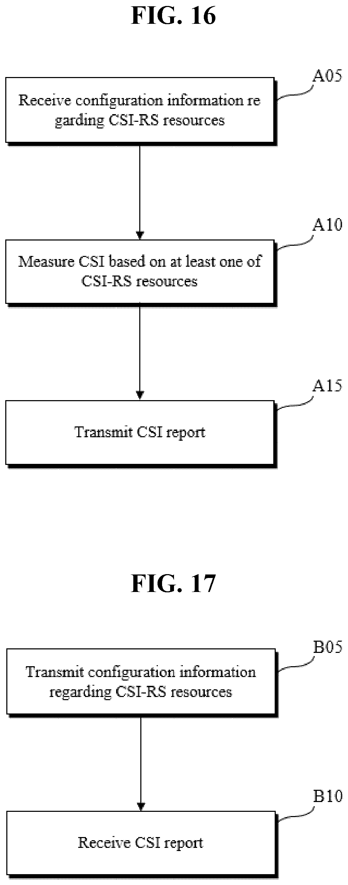

FIG. 16 illustrates an example implementation of a method by which a UE reports CSI in a wireless communication system according to an embodiment of the present disclosure.

Referring to FIG. 16, the UE may receive configuration information regarding a plurality of CSI-RS resources (A05).

The UE may measure CSI based on at least one of the plurality of CSI-RS resources configured through the configuration information (A10).

The UE may transmit a CSI report including results of the CSI measurement (A15).

The CSI report may include a plurality of bitmaps related to the CSI measurement. A first bitmap among the plurality of bitmaps may be a bitmap for reporting at least one CSI-RS resource selected for the CSI measurement among the plurality of CSI-RS resources. A second bitmap among the plurality of bitmaps may be a bitmap for reporting positions of non-zero coefficients among coefficients related to a CSI codebook for each of the selected at least one CSI-RS resource.

Among first part CSI and second part CSI related to the CSI report, the first bitmap may be included in the first part CSI.

A plurality of bits in the first bitmap may be associated with each of the plurality of CSI-RS resources.

The first bitmap may be configured as a single bitmap for an entirety of the plurality of CSI-RS resources.

The second bitmap may be configured individually for each of the at least one CSI-RS resource selected for the CSI measurement among the plurality of CSI-RS resources.

The second bitmap may be provided only for CSI-RS resources associated with each bit having a binary value of '1' on the first bitmap.

The plurality of CSI-RS resources may be related to a plurality of TRPs for CJT.

The CSI report may include precoding-related information determined based on an enhanced type II (eType-II) codebook in 3GPP wireless communication.

The precoding-related information may include information regarding a SD basis, information regarding a FD basis, and information regarding a coefficient matrix for combining the SD basis and the FD basis.

The SD basis may be determined individually for each of the plurality of CSI-RS resources.

The number of SD basis vectors related to the SD basis may be configured individually for each of the plurality of CSI-RS resources.

The FD basis may be determined individually for each of the plurality of CSI-RS resources.

The number of FD basis vectors related to the FD basis may be configured individually for each of the plurality of CSI-RS resources.

FIG. 17 illustrates an example implementation of a method by which a BS receives a CSI report in a wireless communication system according to an embodiment of the present disclosure.

Referring to FIG. 17, the BS may transmit configuration information regarding a plurality of CSI-RS resources (B05).

The BS may receive the CSI report related to at least one of the plurality of CSI-RS resources configured through the configuration information (B 10).

The CSI report may include a plurality of bitmaps related to CSI measurement. The BS may identify at least one CSI-RS resource selected for the CSI measurement among the plurality of CSI-RS resources based on a first bitmap among the plurality of bitmaps. The BS may identify positions of non-zero coefficients among coefficients related to a CSI codebook for each of the selected at least one CSI-RS resource based on a second bitmap among the plurality of bitmaps.

Among first part CSI and second part CSI related to the CSI report, the first bitmap may be included in the first part CSI.

A plurality of bits in the first bitmap may be associated with each of the plurality of CSI-RS resources.

The first bitmap may be configured as a single bitmap for an entirety of the plurality of CSI-RS resources.

The second bitmap may be configured individually for each of the at least one CSI-RS resource selected for the CSI measurement among the plurality of CSI-RS resources.

The second bitmap may be provided only for CSI-RS resources associated with each bit having a binary value of '1' on the first bitmap.

The plurality of CSI-RS resources may be related to a plurality of TRPs for CJT.

The CSI report may include precoding-related information determined based on an enhanced type II (eType-II) codebook in 3GPP wireless communication.

The precoding-related information may include information regarding a SD basis, information regarding a FD basis, and information regarding a coefficient matrix for combining the SD basis and the FD basis.

The SD basis may be determined individually for each of the plurality of CSI-RS resources.

The number of SD basis vectors related to the SD basis may be configured individually for each of the plurality of CSI-RS resources.

The FD basis may be determined individually for each of the plurality of CSI-RS resources.

The number of FD basis vectors related to the FD basis may be configured individually for each of the plurality of CSI-RS resources.

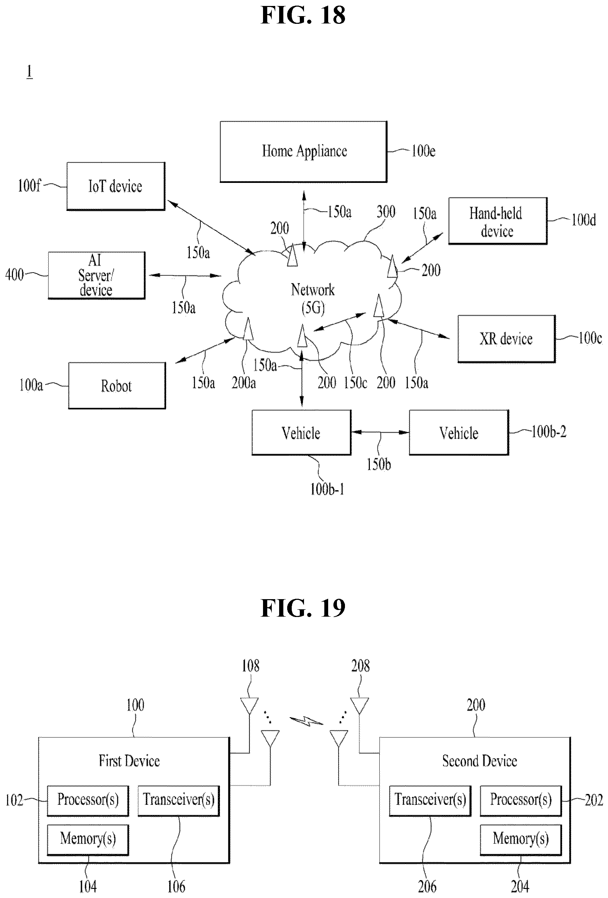

FIG. 18 illustrates a communication system 1 applied to the present disclosure.

Referring to FIG. 18, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 19 illustrates wireless devices applicable to the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

FIG. 17 illustrates an example implementation of a method by which a BS receives a CSI report in a wireless communication system according to an embodiment of the present disclosure.

Referring to FIG. 17, the BS may transmit configuration information regarding a plurality of CSI-RS resources (B05).

The BS may receive the CSI report related to at least one of the plurality of CSI-RS resources configured through the configuration information (B 10).

The CSI report may include a plurality of bitmaps related to CSI measurement. The BS may identify at least one CSI-RS resource selected for the CSI measurement among the plurality of CSI-RS resources based on a first bitmap among the plurality of bitmaps. The BS may identify positions of non-zero coefficients among coefficients related to a CSI codebook for each of the selected at least one CSI-RS resource based on a second bitmap among the plurality of bitmaps.

Among first part CSI and second part CSI related to the CSI report, the first bitmap may be included in the first part CSI.

A plurality of bits in the first bitmap may be associated with each of the plurality of CSI-RS resources.

The first bitmap may be configured as a single bitmap for an entirety of the plurality of CSI-RS resources.

The second bitmap may be configured individually for each of the at least one CSI-RS resource selected for the CSI measurement among the plurality of CSI-RS resources.

The second bitmap may be provided only for CSI-RS resources associated with each bit having a binary value of '1' on the first bitmap.

The plurality of CSI-RS resources may be related to a plurality of TRPs for CJT.

The CSI report may include precoding-related information determined based on an enhanced type II (eType-II) codebook in 3GPP wireless communication.

The precoding-related information may include information regarding a SD basis, information regarding a FD basis, and information regarding a coefficient matrix for combining the SD basis and the FD basis.

The SD basis may be determined individually for each of the plurality of CSI-RS resources.

The number of SD basis vectors related to the SD basis may be configured individually for each of the plurality of CSI-RS resources.

The FD basis may be determined individually for each of the plurality of CSI-RS resources.

The number of FD basis vectors related to the FD basis may be configured individually for each of the plurality of CSI-RS resources.

FIG. 18 illustrates a communication system 1 applied to the present disclosure.

Referring to FIG. 18, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 19 illustrates wireless devices applicable to the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 18.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

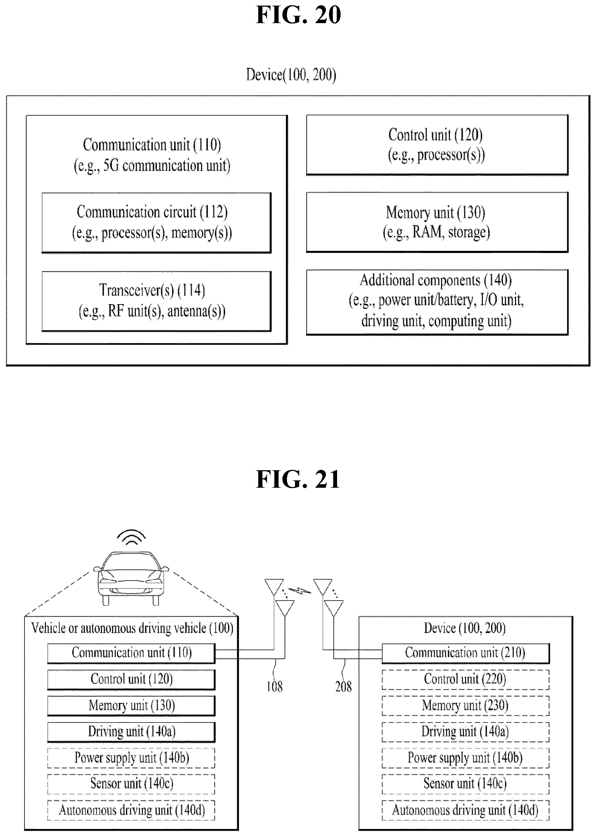

FIG. 20 illustrates another example of a wireless device applied to the present disclosure. The wireless device may be implemented in various forms according to a use-case/service (refer to FIG. 18).

Referring to FIG. 20, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 18), the vehicles (100b-1 and 100b-2 of FIG. 18), the XR device (100c of FIG. 18), the hand-held device (100d of FIG. 18), the home appliance (100e of FIG. 18), the IoT device (100f of FIG. 18), a digital broadcast terminal, a hologram device, a public safety device, an MTC device, a medicine device, a fintech device (or a finance device), a security device, a climate/environment device, the AI server/device (400 of FIG. 18), the BSs (200 of FIG. 18), a network node, etc. The wireless device may be used in a mobile or fixed place according to a use-example/service.

In FIG. 20, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 21 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 21, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 20, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

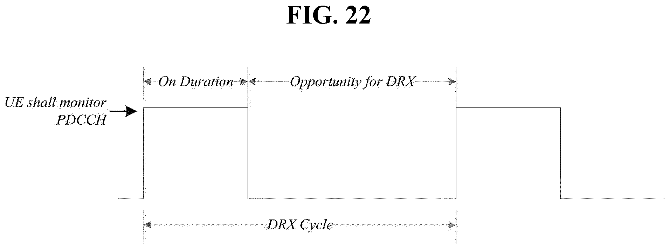

FIG. 22 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 22, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

Table 13 describes a DRX operation of a UE (in the RRC_CONNECTED state). Referring to Table 13, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 13]

|  | Type of signals | UE procedure |
|---|---|---|
| 1st step | RRC signalling(MAC-Cell GroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

Value of drx-OnDurationTimer: defines the duration of the starting period of the DRX cycle.

Value of drx-InactivityTimer: defines the duration of a time period during which the UE is awake after a PDCCH occasion in which a PDCCH indicating initial UL or DL data has been detected

Value of drx-HARQ-RTT-TimerDL: defines the duration of a maximum time period until a DL retransmission is received after reception of a DL initial transmission.

Value of drx-HARQ-RTT-TimerDL: defines the duration of a maximum time period until a grant for a UL retransmission is received after reception of a grant for a UL initial transmission.

drx-LongCycleStartOffset: defines the duration and starting time of a DRX cycle.

drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method of reporting channel state information (CSI) by a user equipment (UE) in a wireless communication system, the method comprising:

   receiving configuration information regarding a plurality of channel state information-reference signal (CSI-RS) resources;
   measuring the CSI based on at least one of the plurality of CSI-RS resources configured through the configuration information; and
   transmitting a CSI report including a result of the CSI measurement,
   wherein the CSI report includes a plurality of bitmaps related to the CSI measurement,
   wherein a first bitmap among the plurality of bitmaps is a bitmap for reporting at least one CSI-RS resource selected for the CSI measurement among the plurality of CSI-RS resources, and
   wherein a second bitmap among the plurality of bitmaps is a bitmap for reporting positions of non-zero coefficients among coefficients related to a CSI codebook for each of the selected at least one CSI-RS resource.

2. The method of claim 1, wherein among first part CSI and second part CSI related to the CSI report, the first bitmap is included in the first part CSI.

3. The method of claim 1, wherein a plurality of bits in the first bitmap are associated with each of the plurality of CSI-RS resources.

4. The method of claim 1, wherein the first bitmap is configured as a single bitmap for an entirety of the plurality of CSI-RS resources, and
wherein the second bitmap is configured individually for each of the at least one CSI-RS resource selected for the CSI measurement among the plurality of CSI-RS resources.

5. The method of claim 1, wherein the second bitmap is provided only for CSI-RS resources associated with each bit having a binary value of '1' on the first bitmap.

6. The method of claim 1, wherein the plurality of CSI-RS resources are related to a plurality of transmission and reception points (TRPs) for coherent joint transmission (CJT).

7. The method of claim 1, wherein the CSI report includes precoding-related information determined based on an enhanced type II (eType-II) codebook in 3rd Generation Partnership Project (3GPP) wireless communication, and wherein the precoding-related information includes information regarding a spatial domain (SD) basis, information regarding a frequency domain (FD) basis, and information regarding a coefficient matrix for combining the SD basis and the FD basis.

8. The method of claim 7, wherein the SD basis is determined individually for each of the plurality of CSI-RS resources.

9. The method of claim 7, wherein the FD basis is determined individually for each of the plurality of CSI-RS resources.

10. The method of claim 7, wherein at least one of a number of SD basis vectors related to the SD basis and a number of FD basis vectors related to the FD basis is configured individually for each of the plurality of CSI-RS resources.

11. A computer-readable recording medium having recorded thereon a program for performing the method of claim 1.

12. A device for wireless communication, the device comprising:

a memory configured to store instructions; and
a processor configured to perform operations by executing the instructions,
wherein the operations of the processor comprise:

receiving configuration information regarding a plurality of channel state information-reference signal (CSI-RS) resources;
measuring channel state information (CSI) based on at least one of the plurality of CSI-RS resources configured through the configuration information; and
transmitting a CSI report including a result of the CSI measurement,
wherein the CSI report includes a plurality of bitmaps related to the CSI measurement,
wherein a first bitmap among the plurality of bitmaps is a bitmap for reporting at least one CSI-RS resource selected for the CSI measurement among the plurality of CSI-RS resources, and
wherein a second bitmap among the plurality of bitmaps is a bitmap for reporting positions of non-zero coefficients among coefficients related to a CSI codebook for each of the selected at least one CSI-RS resource.

13. The device of claim 12, further comprising a transceiver configured to transmit or receive wireless signals under control of the processor,
wherein the device is a user equipment (UE) in a wireless communication system.

14. A method of receiving a channel state information (CSI) report by a base station (BS) in a wireless communication system, the method comprising:

transmitting configuration information regarding a plurality of channel state information-reference signal (CSI-RS) resources; and
receiving the CSI report related to at least one of the plurality of CSI-RS resources configured through the configuration information,
wherein the CSI report includes a plurality of bitmaps related to CSI measurement,
wherein the BS identifies at least one CSI-RS resource selected for the CSI measurement among the plurality of CSI-RS resources based on a first bitmap among the plurality of bitmaps, and
wherein the BS identifies positions of non-zero coefficients among coefficients related to a CSI codebook for each of the selected at least one CSI-RS resource based on a second bitmap among the plurality of bitmaps.

15. A base station (BS) for wireless communication, the BS comprising:

a transceiver; and
a processor configured to control the transceiver to:

transmit configuration information regarding a plurality of channel state information-reference signal (CSI-RS) resources; and
receive a channel state information (CSI) report related to at least one of the plurality of CSI-RS resources configured through the configuration information,
wherein the CSI report includes a plurality of bitmaps related to CSI measurement,
wherein the processor is configured to identify at least one CSI-RS resource selected for the CSI measurement among the plurality of CSI-RS resources based on a first bitmap among the plurality of bitmaps, and
wherein the processor is configured to identify positions of non-zero coefficients among coefficients related to a CSI codebook for each of the selected at least one CSI-RS resource based on a second bitmap among the plurality of bitmaps.

# FIG. 1

| Initial Cell Search | System Information Reception | Random Access Procedure | General DL/UL Tx/Rx S18 |
|---|---|---|---|

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11    S12    S13    S14    S15    S16    S17

• DL/UL ACK/NACK
• UE CQI/PMI/Rank Report
  using PUSCH and PUCCH

# FIG. 2

| One Frame (10ms) |

| Half-Frame (5ms) | Half-Frame (5ms) |

| Subframe 0 (1ms) | ...... | Subframe 4 (1ms) | Subframe 5 (1ms) | ...... | Subframe 9 (1ms) |

Subframe (1ms)

15KHz

| Slot (14 symbols) |

1ms

30KHz

| Slot 0 (14 symbols) | Slot 1 |

500us

60KHz

| Slot 0 (14 symbols) | Slot 1 | Slot 2 | Slot 3 |

250us

120KHz

| Slot 0 (14 symbols) | Slot 1 | Slot 2 | Slot 3 | Slot 4 | Slot 5 | Slot 6 | Slot 7 |

125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

PDCCH

PUSCH

# FIG. 7

UE

BS

Configuration Information related to CSI (710)

RS(e.g., CSI-RS) (720)

Calculate CSI (730)

Report CSI (740)

# FIG. 8

TRP 1

Layer Group #1
for CW#1

TRP 2

Layer Group #1
for CW#2

UE 1

**(a)**

TRP 1

Layer Group #1
for CW#1

TRP 2

Layer Group #2
for CW#2

UE 1

**(b)**

# FIG. 9

Antenna Configuration
: (M, N, P, Mg, Ng) = (4, 4, 2, 2, 2)

# FIG. 10

$$N\_Tx\_total$$

$$N\_Rx \begin{cases} & \end{cases}$$

| H_aggregated,1 |
| --- |
| H_aggregated,2 |

H_aggregated,N3

$$=$$

$$N\_Tx\_1 \quad N\_Tx\_2$$

| H(1,1) | H(2,1) |
| --- | --- |
| H(1,2) | H(2,2) |

| H(1,N3) | H(2,N3) |
| --- | --- |

FIG. 11

EP 4 510 464 A1

# FIG. 12

# FIG. 13

# FIG. 14

```
┌──────────────────────────────────────┐  D05
│  Transmit SI, scheduling information, │
│  and/or CSI-related configuration     │
└──────────────────────────────────────┘
                   │
                   ▼
┌──────────────────────────────────────┐  D10
│      Transmit RS for CSI reporting    │
└──────────────────────────────────────┘
                   │
                   ▼
┌┄┄┄┄┄┄┄┄┄┄┄┄┄┄┄┄┄┄┄┄┄┄┄┄┄┄┄┄┄┄┄┄┄┄┄┄┄┄┐  D15
┊      Transmit CSI reporting indication ┊
└┄┄┄┄┄┄┄┄┄┄┄┄┄┄┄┄┄┄┄┄┄┄┄┄┄┄┄┄┄┄┄┄┄┄┄┄┄┄┘
                   │
                   ▼
┌──────────────────────────────────────┐  D20
│            Receive CSI report         │
└──────────────────────────────────────┘
                   │
                   ▼
┌┄┄┄┄┄┄┄┄┄┄┄┄┄┄┄┄┄┄┄┄┄┄┄┄┄┄┄┄┄┄┄┄┄┄┄┄┄┄┐  D25
┊  Determine data scheduling/precoding  ┊
└┄┄┄┄┄┄┄┄┄┄┄┄┄┄┄┄┄┄┄┄┄┄┄┄┄┄┄┄┄┄┄┄┄┄┄┄┄┄┘
                   │
                   ▼
┌┄┄┄┄┄┄┄┄┄┄┄┄┄┄┄┄┄┄┄┄┄┄┄┄┄┄┄┄┄┄┄┄┄┄┄┄┄┄┐  D30
┊     Transmit data scheduling/RS       ┊
┊     (e.g., RS for data decoding)      ┊
└┄┄┄┄┄┄┄┄┄┄┄┄┄┄┄┄┄┄┄┄┄┄┄┄┄┄┄┄┄┄┄┄┄┄┄┄┄┄┘
```

# FIG. 15

Receive SI, scheduling information, and/or CSI-related configuration — E05

Receive RS for CSI reporting — E10

Receive CSI reporting indication — E15

Determine/calculate CSI — E20

Perform CSI reporting — E25

Receive data scheduling/RS (e.g., RS for data decoding) — E30

# FIG. 16

Receive configuration information re garding CSI-RS resources — A05

Measure CSI based on at least one of CSI-RS resources — A10

Transmit CSI report — A15

# FIG. 17

Transmit configuration information regarding CSI-RS resources — B05

Receive CSI report — B10

# FIG. 18

# FIG. 19

# FIG. 20

Device(100, 200)

| | |
|---|---|
| **Communication unit (110)** (e.g., 5G communication unit) | **Control unit (120)** (e.g., processor(s)) |
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

# FIG. 21

Vehicle or autonomous driving vehicle (100)

Communication unit (110)
Control unit (120)
Memory unit (130)
Driving unit (140a)
Power supply unit (140b)
Sensor unit (140c)
Autonomous driving unit (140d)

108

208

Device (100, 200)

Communication unit (210)
Control unit (220)
Memory unit (230)
Driving unit (140a)
Power supply unit (140b)
Sensor unit (140c)
Autonomous driving unit (140d)

EP 4 510 464 A1

# FIG. 22

On Duration ◄──►◄── Opportunity for DRX ──►

UE shall monitor
PDCCH

◄─────────── DRX Cycle ──────────►

52

## INTERNATIONAL SEARCH REPORT

International application No.

**PCT/KR2023/004497**

### A. CLASSIFICATION OF SUBJECT MATTER

**H04B 7/0456**(2017.01)i; **H04B 7/024**(2017.01)i; **H04B 7/06**(2006.01)i; **H04L 5/00**(2006.01)i

According to International Patent Classification (IPC) or to both national classification and IPC

### B. FIELDS SEARCHED

Minimum documentation searched (classification system followed by classification symbols)

H04B 7/0456(2017.01); H04B 7/06(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI(channel state information), CSI-RS 자원(CSI-RS resource), 비트맵(bitmap), 계수(coefficient), 코드북(codebook)

### C. DOCUMENTS CONSIDERED TO BE RELEVANT

| Category* | Citation of document, with indication, where appropriate, of the relevant passages | Relevant to claim No. |
|---|---|---|
| Y | WO 2021-068149 A1 (QUALCOMM INCORPORATED) 15 April 2021 (2021-04-15) See paragraphs [0039], [0042]-[0044], [0049], [0063], [0066] and [0102]-[0105]; and figure 2. | 1-15 |
| Y | WO 2021-254954 A1 (FRAUNHOFER-GESELLSCHAFT ZUR FÖRDERUNG DER ANGEWANDTEN FORSCHUNG E.V.) 23 December 2021 (2021-12-23) See page 31, lines 13-31. | 1-15 |
| Y | WO 2022-018672 A1 (LENOVO (SINGAPORE) PTE. LTD.) 27 January 2022 (2022-01-27) See paragraphs [0066] and [0104]. | 6 |
| A | WO 2022-051941 A1 (QUALCOMM INCORPORATED) 17 March 2022 (2022-03-17) See paragraphs [0101]-[0118]; and figure 7. | 1-15 |
| A | US 2021-0075482 A1 (SAMSUNG ELECTRONICS CO., LTD.) 11 March 2021 (2021-03-11) See paragraphs [0106]-[0257]; and figures 13-15. | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 July 2023** | **20 July 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/004497**

| Patent document cited in search report | | | Publication date (day/month/year) | Patent family member(s) | | | Publication date (day/month/year) |
|---|---|---|---|---|---|---|---|
| WO | 2021-068149 | A1 | 15 April 2021 | CN | 114503729 | A | 13 May 2022 |
| | | | | EP | 4042785 | A1 | 17 August 2022 |
| | | | | US | 2023-0163911 | A1 | 25 May 2023 |
| | | | | WO | 2021-068915 | A1 | 15 April 2021 |
| WO | 2021-254954 | A1 | 23 December 2021 | CN | 115956350 | A | 11 April 2023 |
| | | | | EP | 4165816 | A1 | 19 April 2023 |
| WO | 2022-018672 | A1 | 27 January 2022 | BR | 112023000948 | A2 | 07 February 2023 |
| | | | | CA | 3184114 | A1 | 27 January 2022 |
| | | | | EP | 4186173 | A1 | 31 May 2023 |
| | | | | KR | 10-2023-0041095 | A | 23 March 2023 |
| WO | 2022-051941 | A1 | 17 March 2022 | None | | | |
| US | 2021-0075482 | A1 | 11 March 2021 | EP | 4026259 | A1 | 13 July 2022 |
| | | | | KR | 10-2022-0057618 | A | 09 May 2022 |
| | | | | US | 11601169 | B2 | 07 March 2023 |
| | | | | WO | 2021-049873 | A1 | 18 March 2021 |

Form PCT/ISA/210 (patent family annex) (July 2022)